# EUROPEAN PATENT APPLICATION

(11) **EP 1 939 782 A2**
(43) Date of publication of application: **02.07.2008**
(21) Application number: 07025186.3
(22) Date of filing: 28.12.2007
(51) Int. Cl.: G06F 21/00

(54) **Apparatus, method, and computer program product for editing digital contents**

(30) Priority: 28.12.2006 JP 2006354750
(71) Applicant: Kabushiki Kaisha Toshiba, Minato-ku, Tokyo 105-8001 (JP)
(72) Inventor: Ito, Satoshi, Tokyo 105-8001 (JP)
(74) Representative: HOFFMANN EITLE

(57) **Abstract**

A digital content editing apparatus (100) determines a consistency between elements of condition information that define the same kind of usage rights among usage rights of digital contents, and detects condition information including an inconsistency as inconsistent condition information. The apparatus (100) further determines a consistency in the elements of condition information between types of devices that play the digital contents, which are classified according to the processing functions for the condition information, detects a device type including an inconsistency as an inconsistent device type, and presents the detected inconsistent condition information and inconsistent device type to the user.

## Description

### CROSS-REFERENCE TO RELATED APPLICATIONS

This application is based upon and claims the benefit of priority from the prior Japanese Patent Application No. 2006-354750, filed on December 28, 2006; the entire contents of which are incorporated herein by reference.

### BACKGROUND OF THE INVENTION

### 1. Field of the Invention

The present invention relates to an apparatus, a method, and a computer program product for editing digital contents, that controls use of the digital contents according to descriptions of the usage rights.

### 2. Description of the Related Art

With regard to commercial digital contents such as movies and music recoded on a recording medium as typified by a digital versatile disk (DVD), secure protection of the copyright has been developed in a form that is advantageous to the content provider. The copyright protecting function in this technology provides a quite rigid and tough mechanism to fulfill a strong demand for preventing duplication of the digital contents.

For the next-generation optical disk such as a high definition DVD (HD DVD), more flexible digital rights management (DRM) is increasingly demanded in the face of a recent trend of diversification of content businesses and online content businesses. For example, the Advanced Access Content System (AACS) HD DVD and DVD Pre-recorded Book: Revision 0.912 (3.5 Title Usage File) provides a mechanism for content protection, that separates contents and usage rights and describes the usage rights themselves to perform a more detailed usage control than ever before.

In the ISO/IEC 21000 (MPEG-21) series aiming to distribute and manage digital contents in various forms, a right expression language (REL) (hereinafter, MPEG-21REL) that enables flexible usage right descriptions for performing the usage control is standardized. The MPEG-21REL is designed to aim at a wide usage independent of domains. When the MPEG-21REL is applied to a built-in device (for example, a mobile phone device and a DVD player), physical restrictions (such as a central processing unit (CPU) performance, a memory size, and presence or absence of a network connecting function) are imposed. Therefore, standardization activities for a REL Profile that defines a subset of RELs required for specific applications have been recently conducted. To use this mechanism, the licenser must generate the usage rights himself/herself. For example, USP Application Pub. No. US2003/0125976 proposes a method of generating machine-readable data through a graphical input.

When the usage rights for the digital contents are manually described, it is difficult to exhaustively anticipate how the use conditions are applied when the digital contents are practically supplied to the market, with the usage rights being attached thereto. This is because the descriptions of the use conditions are quite complicated, and it greatly depends on how much performance and function that are necessary to meet the use condition are provided to the device on which the usage right is implemented. For example, when an effective period of the content playback is set in the usage right, equipment that does not have a device securely managing the time cannot perform the intended usage control.

In the case of a HD DVD, the order of playing plural content components included in the HD DVD is given by control information called play list. Each of the content components is related to a rule set called usage rule set (hereinafter, URS). The URS includes four usage rules (hereinafter, UR) at a maximum. In each UR, a detailed use condition associated with use of the relevant content component is described. The use condition is finally determined as an AND (logical AND) of these URs. According to the specifications of the AACS, the following four types of representations are accepted in the UR.
(1) Type of CCI for Update (hereinafter, "CCI type")
   This type of UR updates copy control information (CCI) included in a stream of contents to define use as new CCI.
(2) Type of Time-based Condition (hereinafter, "TBC type")
   This type of UR defines an effective period in which contents can be played.
(3) Type of REL (hereinafter, "REL type")
   This type of UR uses a usage description language to define a use condition.
(4) Type of Output Control Bits (hereinafter, "OCB type")
   This type of UR defines bits for identifying a device of an output destination.

All kinds of URs are not always processed effectively depending on functions of devices that perform playback of digital contents. Accordingly, each UR includes, in addition to a BODY unit that specifically describes the use condition, a mode setting unit that defines whether to forcibly play contents independently of the use condition described in the BODY unit (Type 1) or stop the play in any event (Type 2), when the UR cannot be processed effectively.

As described above, there are various descriptions of the content usage rights according to the performances or functions of the devices. Therefore, it is difficult to confirm that an operation intended by the user is performed under various conditions. Particularly in the UR of the REL type, because expressions corresponding to the CCI type, the TBC type, and the OCB type are also possible, the difficulty is increased. For example, an unreasonable condition in which an AND of the URs is always "False" (hereinafter, "logical inconsistency"), or a problem that "a higher-order (more valuable) model is forced to be used in worse conditions than a lower-order (less valuable) model" resulting from the fact that the operation varies depending on whether the use condition processing function is provided (hereinafter, "substantive inconsistency") can occur. These inconsistencies cannot be detected by the common technologies mentioned above.

The URS is assigned to each content component. Therefore, even when the inconsistency in the URS itself is overcome, a substantive inconsistency can occur throughout the play list. For example, when the playback conditions are different between URSs, contents can be played partway while playback by a certain model can always stop when a certain content component is to be played. To detect the inconsistency in the URS across the content components, the usage right must be checked throughout the play list, which cannot be achieved by the common technologies mentioned above.

### SUMMARY OF THE INVENTION

According to one aspect of the present invention, a digital content editing apparatus includes an acquiring unit that acquires plural elements of condition information about a usage right of individual pieces of digital content; a first detecting unit that determines a consistency between elements of condition information that define a same kind of usage rights, among the plural elements of condition information, and detects inconsistent condition information in which a logical multiplication of the elements of the condition information is always false; a first storage unit that stores a pattern that is related to a combination of the condition information for each type of devices playing the digital contents that are classified based on presence or absence of a function for processing each element of the condition information; a second storage unit that stores a device relation model that defines a ranking relation between the device types according to a partial order relation of the processing function; a second detecting unit that determines a consistency in the rankings of the device types between elements of the condition information, based on the pattern and the device relation model, and detects an inconsistent device type in which an inconsistency is occurred in a device type; and a first presenting unit that presents the inconsistent condition information and the inconsistent device type detected by the first and second detecting units.

According to another aspect of the present invention, a digital content editing method includes acquiring plural elements of condition information about a usage right of individual pieces of digital content; determining a consistency between elements of condition information that define a same kind of usage rights, among the plural elements of condition information; first detecting an inconsistent condition information in which a logical multiplication of the elements of the condition information is always false; determining a consistency in the rankings of the device types between elements of the condition information, based on a pattern that is related to a combination of the condition information for each type of devices playing the digital contents that are classified based on presence or absence of a function for processing each element of the condition information, and a device relation model that defines a ranking relation between the device types according to a partial order relation of the processing function; second detecting an inconsistent device type in which an inconsistency is occurred in a device type; and presenting the inconsistent condition information and the inconsistent device type detected in the first and second detecting.

A computer program product according to still another aspect of the present invention causes a computer to perform the method according to the present invention.

### BRIEF DESCRIPTION OF THE DRAWINGS

Fig. 1 is a schematic diagram for illustrating a configuration of a digital content editing apparatus;
Fig. 2 is a schematic diagram for explaining TUF data and a play list;
Fig. 3 is a diagram for illustrating an example of a URS;
Fig. 4 is a flowchart of an entire process;
Fig. 5 is a flowchart of a condition-independency check process;
Fig. 6A is a schematic diagram for illustrating an MPEG-21REL;
Fig. 6B is another schematic diagram for illustrating the MPEG-21REL;
Fig. 7 is a schematic diagram for explaining a REL-condition-element classifying table;
Fig. 8A is a schematic diagram for explaining a checklist;
Fig. 8B is another schematic diagram for explaining the checklist;
Figs. 9A to 9F are schematic diagrams for explaining a condition-description converting table;
Fig. 10 is a flowchart of an inconsistency detecting process;
Fig. 11A is a schematic diagram for explaining inconsistent data;
Fig. 11B is another schematic diagram for explaining the inconsistent data;
Fig. 12 is a schematic diagram for illustrating a presented inconsistent data;
Fig. 13A is a schematic diagram for explaining an expected device-relation model;
Fig. 13B is another schematic diagram for explaining the expected device-relation model;
Fig. 14 is a schematic diagram for explaining an UR-type pattern;
Fig. 15 is a flowchart of a use-condition combining process;
Fig. 16A is a schematic diagram for explaining device model data;
Fig. 16B is another schematic diagram for explaining the device model data;
Fig. 17A is a flowchart of a substantive-inconsistency detecting process;
Fig. 17B is another flowchart of the substantive-inconsistency detecting process;
Fig. 18 is a schematic diagram for illustrating a presented device model data;
Fig. 19 is a flowchart of an inter-URS-situation generating process;
Fig. 20A is a schematic diagram for explaining Walk-through situation data;
Fig. 20B is another schematic diagram for explaining the Walk-through situation data;
Fig. 21 is a schematic diagram for illustrating a presented Walk-through situation data;
Fig. 22 is a schematic diagram for explaining a provider policy;
Figs. 23A to 23D are other examples of the presented Walk-through situation data; and
Fig. 24 is a schematic diagram for illustrating a hardware configuration of the digital content editing apparatus.

### DETAILED DESCRIPTION OF THE INVENTION

Exemplary embodiments of an apparatus, a method, and a computer program product for editing digital contents according to the present invention will be explained below in detail with reference to the accompanying drawings.

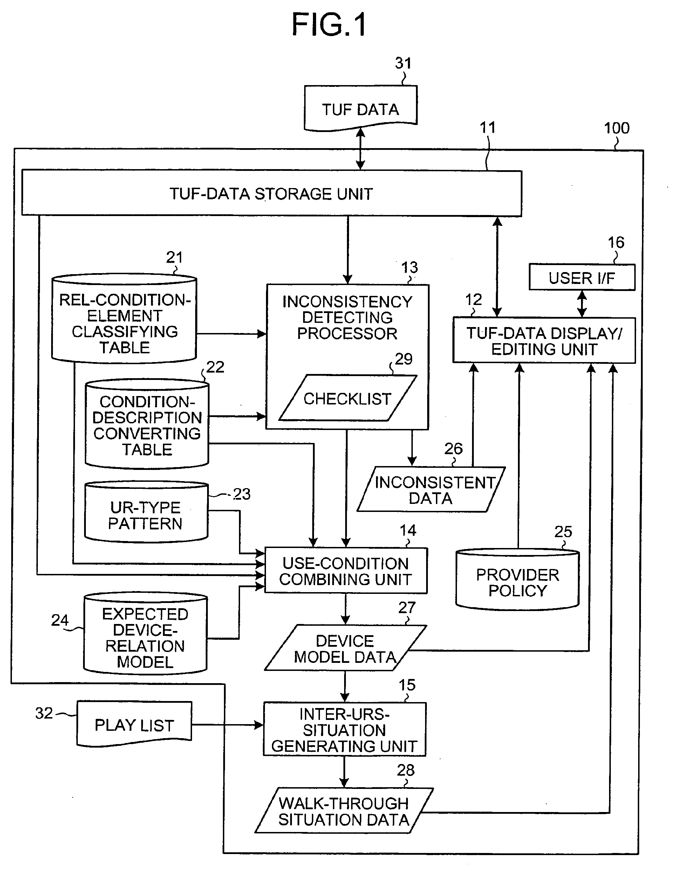

Fig. 1 is a functional block diagram of a digital content editing apparatus 100. As shown in Fig. 1, the digital content editing apparatus 100 includes a TUF (title usage file)-data storage unit 11, a TUF-data display/editing unit 12, an inconsistency detecting processor 13, a use-condition combining unit 14, an inter-URS-situation generating unit 15, a user interface (I/F) 16, and the like. The digital content editing apparatus 100 receives a TUF data 31 and a play list 32, and outputs the edited TUF data 31.

The digital content editing apparatus 100 internally has resource information such as a REL-condition-element classifying table 21, a condition-description converting table 22, a UR-type pattern 23, an expected device-relation model 24, and a provider policy 25. As intermediate data, an inconsistent data 26, a device model data 27, a Walk-through situation data 28, and a checklist 29 are generated.

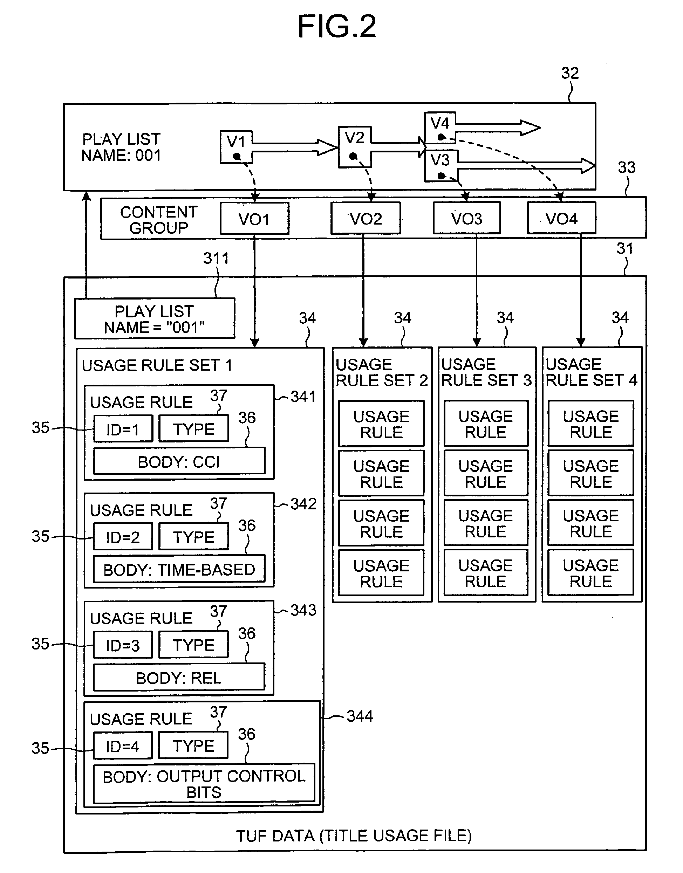

The TUF data 31 and the play list 32 inputted to the digital content editing apparatus 100 are explained. Fig. 2 schematically depicts data configurations of the TUF data 31 and the play list 32 in a HD DVD.

In the play list 32, control information such as the order of playback and arrangement of component contents (Vol to Vo4) included in a component content group 33 separately stored, and information of links to component contents to be controlled (V1 to V4) is described. URSs 34 are related to the component contents that are linked by the play list 32, respectively.

The URS 34 is a component of the TUF data 31 that are organized in units of the corresponding play lists 32. In the TUF data 31, the name of the play list corresponding to the TUF data 31 is described (see 311 in Fig. 2), to uniquely identify the correspondence relation.

The URS 34 includes four URs at a maximum. In each of the URs (341 to 344), detailed use conditions (condition elements) associated with the usage right of the corresponding component content are described. The use conditions are determined as an AND of these URs. According to the specifications of the AACS, four types of URs, i.e., a CCI type 341, a TBC type 342, a REL type 343, and an OCB type 344 can be defined. To identify the types, ID=1 to 4 are provided to an ID unit 35, respectively.

Because all kinds of URs are not always processed effectively depending on functions of a device that utilizes the component contents, each of the URs (341 to 344) includes, in addition to a BODY unit 36 that specifically describes the use conditions, a Type unit 37 that defines, when the device cannot process a UR effectively, whether to reproduce the content in defiance of the UR (Type=1) or to stop the play (Type=2). When the UR is effectively processed, control according to the use conditions described in the BODY unit 35 is obviously performed regardless of the setting in the Type unit 37.

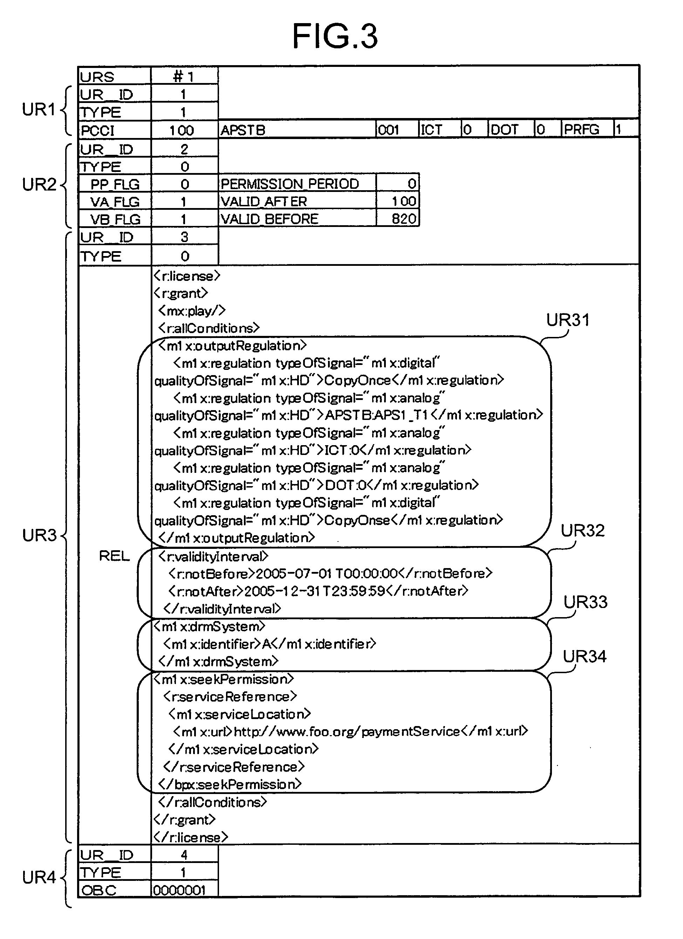

Fig. 3 is a schematic diagram for illustrating a URS stored in the TUF data 31. Fig. 3 depicts a case that four URs are stored. In Fig. 3, UR1 denotes an area for storing condition elements of a CCI-type UR, UR2 denotes an area for storing condition elements of a TBC-type UR, UR3 denotes an area for storing condition elements of a REL-type UR, and UR4 denotes an area for storing condition elements of an OCB-type UR.

In the UR3 of the REL-type UR, UR31 denotes an area for storing condition elements associated with the CCI. UR32 denotes an area for storing condition elements associated with the TBC. UR33 denotes an area for storing condition elements associated with the OCB. UR34 denotes an area for storing other condition elements.

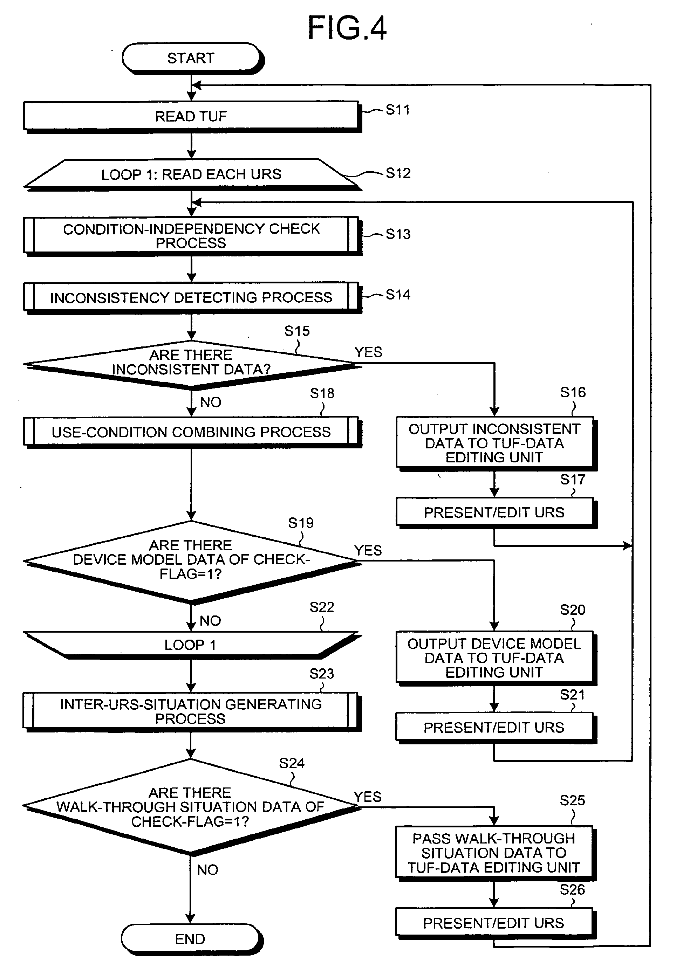

Fig. 4 is a flowchart of an entire process performed by the digital content editing apparatus 100 shown in Fig. 1. First, the TUF-data storage unit 11 reads the TUF data 31 (step S11), and repeatedly performs processes from steps S12 to S22 for all URSs included in the TUF data 31 (Loop 1). In the Loop 1, the inconsistency detecting processor 13 performs a condition-independency check process (step S13), and an inconsistency detecting process (step S14). The condition-independency check process (step S13) and the inconsistency detecting process (step S13) are explained below.

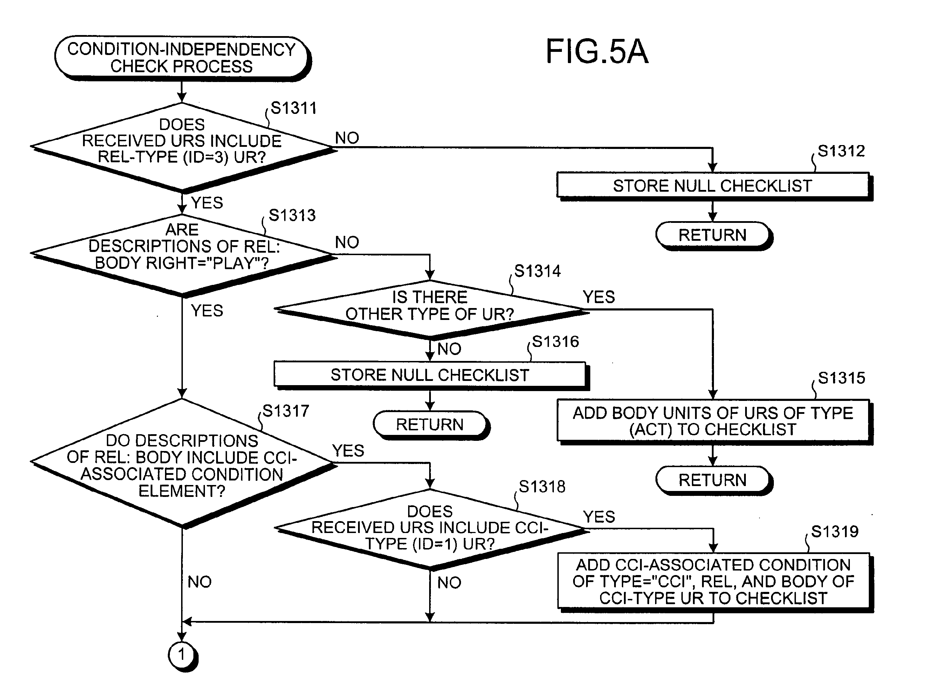

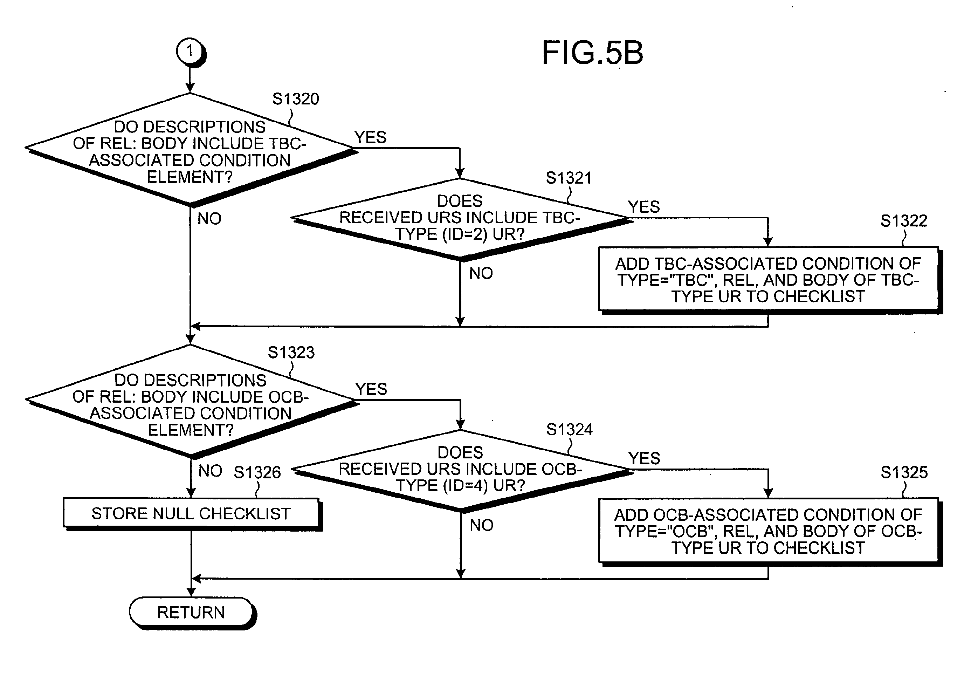

Fig. 5 is a flowchart of the condition-independency check process at step S13. In the processing performed at step S13, whether use conditions included in the REL-type UR include the equivalent conditions to the CCI type, the TBC type, and the OCB type is mainly examined. Before the specific processing is explained, a data configuration of the REL-condition-element classifying table 21 for identifying equivalent conditions to the concept of an MPEG-1REL as an example of the REL is explained.

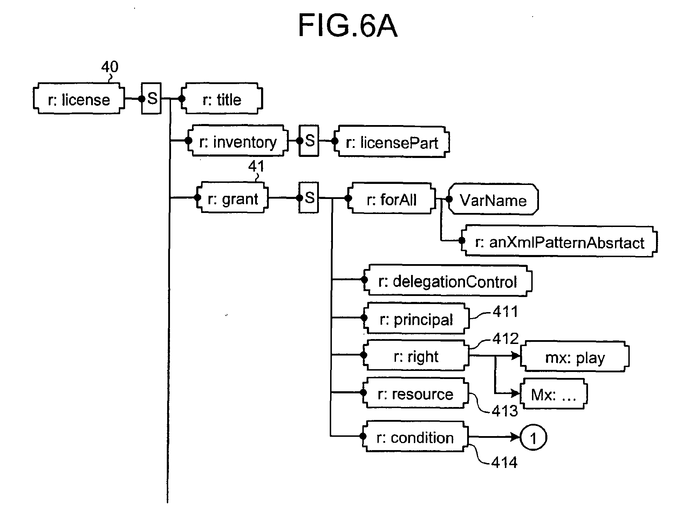

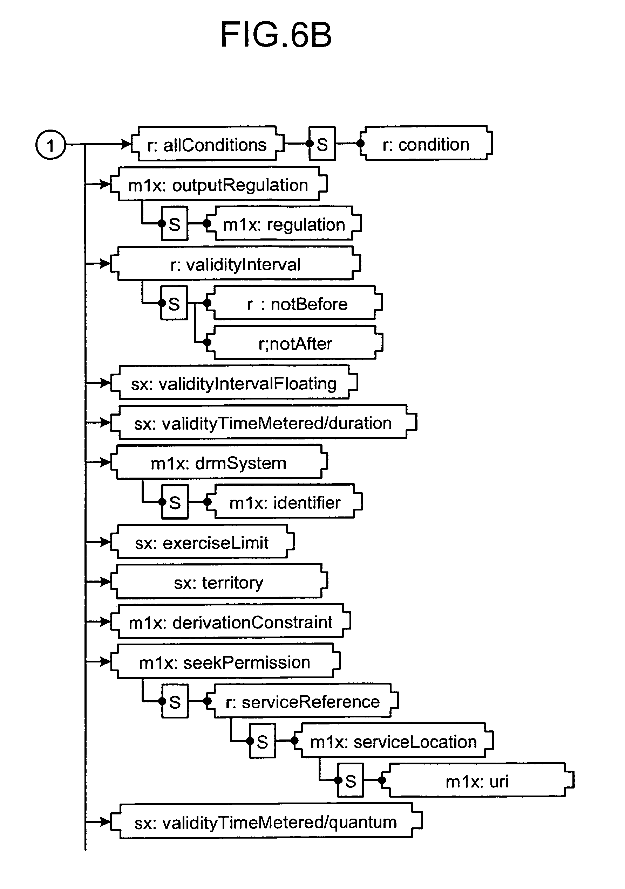

Figs. 6A and 6B schematically depict a configuration of the MPEG-21REL. The MPEG-21REL expresses a usage right describing system using a XML schema. A grant (details of a granted right) 41 that is composed of four major concepts, i.e., a principal (subject matter of the right) 411, a right (operation or action to be permitted) 412, a resource (object component content) 413, and a condition 414 is a basic unit of processing. The grants 41 are bunched and wrapped, to distribute a license 40.

As shown in Figs. 6A and 6B, various elements such as "mx:play", "m1x:outputRegulation", and "r:validityInterval" are related to the right 412, the condition 414, and the like, to set more detailed use conditions.

To perform usage control of the component contents, more specific operations and conditions are required. In the MPEG-21REL, they are all defined as derivatives of the four major elements. A plurality of the conditions 414 can be described in parallel. In this case, the conditions are examined as an AND of the all conditions.

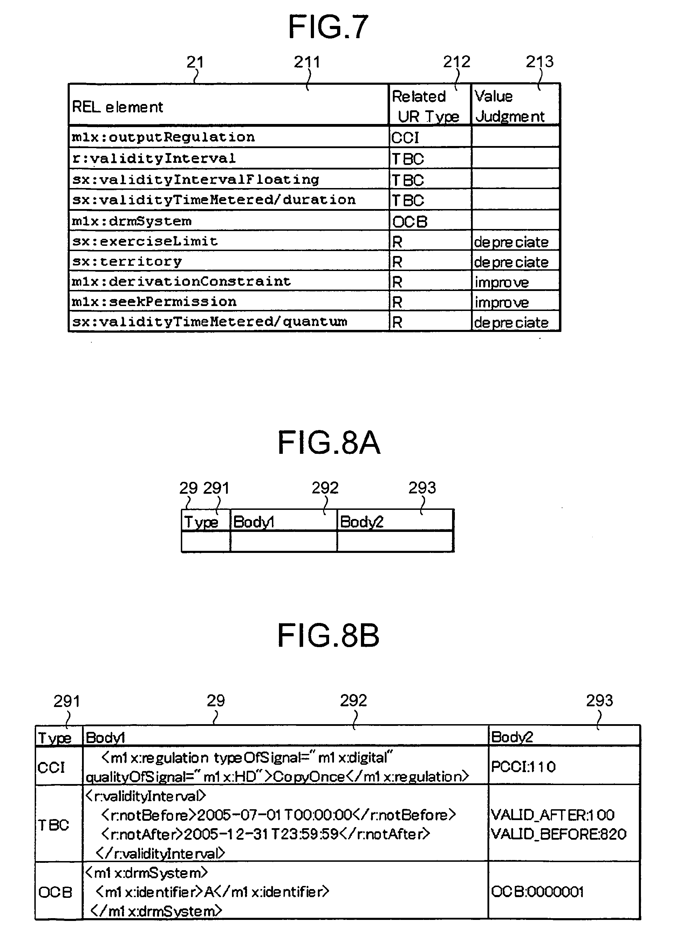

Fig. 7 is a schematic diagram for illustrating a data configuration of the REL-condition-element classifying table 21. The REL-condition-element classifying table 21 classifies the condition elements of the REL as shown in Fig. 7. Names of the condition elements are stored in a REL_element 211, and symbols indicating classification are stored in a Related_UR_Type 212. A logical inconsistency in the entire URS is determined by this classification symbol. Types of the condition element indicating whether it imposes a restriction (Depreciate) or gives a merit (Improve) to the user are described in a Valu_judgement 213. The using method therefor is explained later. The elements shown in Fig. 7 are defined by a MPEG-21REL MAM (Mobile And optional Media) Profile aiming at application to a mobile device or an optical disk.

The condition-independency check process at step S13 is explained with reference to Fig. 5. The inconsistency detecting processor 13 determines whether a received URS includes an UR of the REL type (ID=3) (step S1311). When determining that no UR of the REL type (ID=3) is included (NO at step S1311), the inconsistency detecting processor 13 determines that there is no possibility of a logical inconsistency. The inconsistency detecting processor 13 stores a null checklist (step S1312), and proceeds to step S14 in Fig. 4.

When determining that an UR of the REL type (ID=3) is included (YES at step S1311), the inconsistency detecting processor 13 determines whether a condition element stored in the BODY unit of the REL-type UR (right element 412) describes "play" (step S1313). When determining that the right element 412 does not describe "play" (NO at step S1313), the inconsistency detecting processor 13 determines whether the URS includes a UR of other ID (step S1314).

Because the URs having other IDs (CCI type, TBC type, and OCB type) are all describe conditions for playing, an AND of such UR and the right element 412 of the REL type is always zero. Therefore, when determining that the URS includes a UR of other ID (YES at step S1314), the inconsistency detecting processor 13 relates the type (ACT) of these URs (REL type and other type) and the condition elements stored in the BODY units of the corresponding UR to each other, to be added in the checklist 29 (step S1315), and proceeds to step S14 in Fig. 4.

When determining that the target URS includes no UR of other ID (NO at step S1314), the inconsistency detecting processor 13 determines that there is no possibility of a logical inconsistency. The inconsistency detecting processor 13 stores a null checklist (step S1316), and proceeds to step S14 in Fig. 4.

When determining that the right element 412 describes "play" (YES at step S1313), the inconsistency detecting processor 13 determines whether the BODY unit of the REL-type UR includes a "condition" element associated with the CCI, based on the REL-condition-element classifying table 21 (step S1317).

When determining that the BODY unit of the REL-type UR includes a "condition" element associated with the CCI (YES at step S1317), the inconsistency detecting processor 13 determines whether the target URS includes a UR of the CCI type (ID=1) (step S1318). When determining that the URS includes a UR of the CCI type (ID=1) (YES at step S1318), the inconsistency detecting processor 13 determines that there is a possibility of a logical inconsistency, relates the types (CCI) of these URs (REL type and CCI type) and the condition elements stored in the BODY units of the corresponding URs to each other, to be added in the checklist 29 (step S1319), and proceeds to step S1320. For the condition element of the REL type, the condition element associated with the CCI is stored.

When determining that the target URS includes no UR of the CCI type (ID=1) (NO at step S1318), the inconsistency detecting processor 13 proceeds directly to step S1320.

When determining that the BODY unit of the REL-type UR includes no "condition" element associated with the CCI (NO at step S1317), the inconsistency detecting processor 13 determines whether the BODY of the REL-type UR includes a "condition" element associated with the TBC, based on the REL-condition-element classifying table 21 (step S1320).

When determining that the BODY unit of the REL-type UR includes a "condition" element associated with the TBC (YES at step S1320), the inconsistency detecting processor 13 determines whether the target URS includes an UR of the TBC type (ID=2) (step S1321). When determining that the URS includes a UR of the TBC type (ID=2) (YES at step S1321), the inconsistency detecting processor 13 determines that there is a possibility of a logical inconsistency, relates the types (TBC) of these URs (REL type and TBC type) and condition elements stored in the BODY units of the corresponding URs to each other, to be added in the checklist 29 (step S1322), and proceeds to step S1323. For the condition element of the REL type, a condition element associated with the TBC is stored.

When determining that the target URS includes no UR of the TBC type (ID=2) (NO at step S1321), the process directly proceeds to step S1323.

When determining that the BODY unit in the REL-type UR includes no "condition" element associated with the TBC (NO at step S1320), the inconsistency detecting processor 13 determines whether the BODY unit in the REL-type UR includes a "condition" element associated with the OCB, based on the REL-condition-element classifying table 21 (step S1323).

When determining that the BODY unit in the REL-type UR includes a "condition" element associated with the OCB (YES at step S1323), the inconsistency detecting processor 13 determines whether the target URS includes a UR of the OCB type (ID=4) (step S1324). When determining that the URS includes a UR of the OCB type (ID=4) (YES at step S1324), the inconsistency detecting processor 13 determines that there is a possibility of a logic inconsistency, relates the types (OCB) of these URs (REL type and OCB type) and condition elements stored in the BODY units of the corresponding URs to each other, to be added in the checklist 29 (step S1325), and proceeds to step S14 in Fig. 4. For the condition element of the REL type, the condition element associated with the OCB is stored.

When determining that the target URS includes no UR of the OCB type (ID=4) (NO at step S1324), the process directly proceeds to step S14.

When determining that the BODY unit in the REL-type UR includes no "condition" element associated with the OCB (NO at step S1323), the process directly proceeds to step S14 in Fig. 4.

Fig. 8A depicts a data configuration of the checklist 29 generated in the condition-independency check process. Fig. 8B depicts a specific example of the checklist 29. As shown in Figs. 8A and 8B, the checklist 29 includes a field 291 (URType) for storing the types of URs, a field 292 (Body1) for storing condition elements described in the BODY unit of a REL-type UR, and a field 293 for storing condition elements described in the BODY units of other types of URs (CCI type, TBC type, and OCB type), these fields being related to each other.

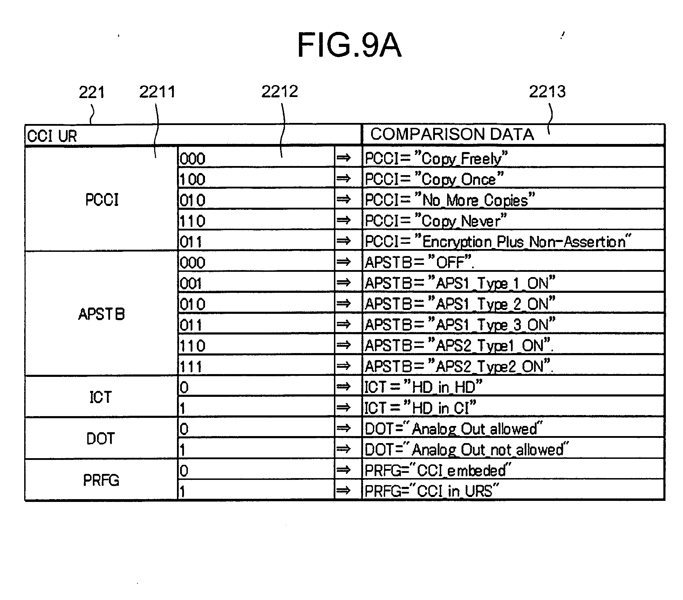

The inconsistency detecting process at step S14 is explained. A condition-description converting table 22 used in the inconsistency detecting process at step S14 is first explained with reference to Figs. 9A to 9F.

Fig. 9A is a schematic diagram for illustrating the condition-description converting table 22 for converting condition elements of the CCI-type UR into comparison data (CCI converting table 221). As shown in Fig. 9A, the CCI converting table 221 includes a field 2211 for storing names of variables (such as PCCI, APSTB, ICT, DOT, and PRFG) that can be described in the BODY unit of the CCI-type UR, a field 2212 for storing values of the variables that can be set for each variable name (such as 000 and 100), and a field 2213 for storing comparison data for conversion (such as PCCI="Copy_Freely"), corresponding to the fields 2211 and 2212, these fields being related to each other.

The inconsistency detecting processor 13 refers to the CCI converting table 221, and converts the descriptions of the condition elements in the CCI-type UR included in the checklist 29, based on the name and value of the variable of the condition element, into a description format corresponding to the variable name and the variable value defined in the field 2213. For example, in the case of the checklist 29 as shown in Fig. 8B, a condition element of the CCI-type UR stored in the Body2 of URType=CCI is converted into [PCCI="Copy_Never"].

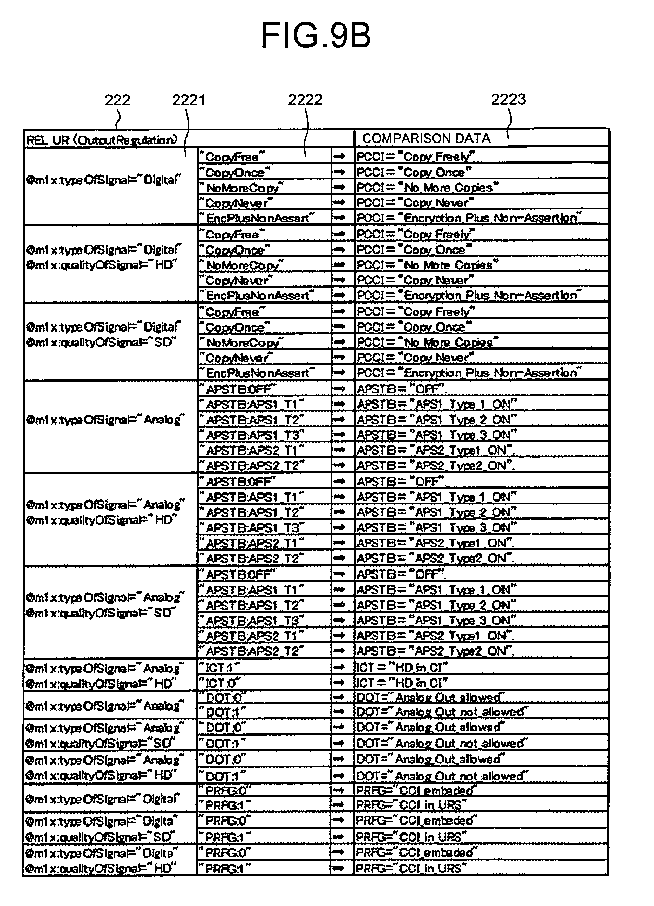

Fig. 9B is another example of the condition-description converting table 22 for converting a condition element associated with the CCI in the REL-type UR into comparison data (REL (associated with CCI) converting table 222). As shown in Fig. 9B, the REL (associated with CCI) converting table 222 includes a field 2221 for storing names of elements associated with the CCI that can be described in the BODY unit of the REL-type UR (such as @bpx:typeOfsignal="Digital"), a field 2222 for storing values of CCI-associated elements that can be set for the names of the elements (such as "CopyFree"), and a field 2223 for storing comparison data for conversion (such as PCCI="Copy_Freely"), corresponding to the conditions of the fields 2221 and 2222, these fields being related to each other.

The inconsistency detecting processor 13 refers to the REL (associated with CCI) converting table 222, and converts CCI-associated descriptions among the condition elements of the REL-type UR included in the checklist 29, based on the name and value of the CCI-associated condition element, into a description format defined by the field 2223 corresponding to the name and value of the CCI-associated element. For example, in the case of the checklist 29 as shown in Fig. 8B, a CCI-associated condition element in the REL-type UR stored in the Body1 of Type=CCI is converted into [PCCI="Copy_Once"].

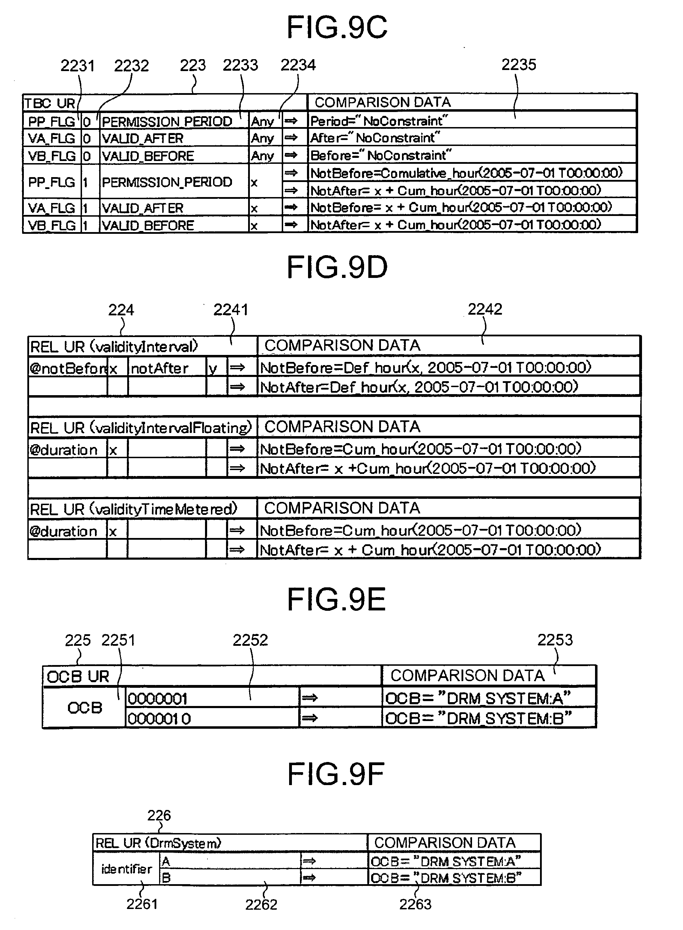

Fig. 9C is another example of the condition-description converting table 22 for converting a condition element of a TBC-type UR into comparison data (TBC converting table 223). As shown in Fig. 9C, the TBC converting table 223 includes fields 2231 to 2235.

The field 2231 stores names of variables (such as PP_FLG, and VA_FLG) that can be described in the BODY unit of the TBC-type UR. The field 2232 stores first variable values (such as 0 and 1) that can be set for the variable name. The field 2233 stores second variable values (such as PERMISSION_PERIOD, VALID_AFTER) that can be set for the variable name. "0" in the field 2232 indicates that substantially no usage restriction is set by the TBC-type UR, which is regarded as synonymous with that there is no specific description in the BODY unit of the TBC-type UR. "1" in the field 2232 indicates that a usage restriction is set by the TBC-type UR. A specific description is given in the BODY unit of the TBC-type UR.

A field 2234 stores values (Any, x) of a period of restriction according to setting that is defined by the fields 2231, 2232 and 2233. "Any" indicates that there is no restriction on the period, and "x" indicates a variable that is specifically set. A field 2235 stores comparison data for conversion (such as NotAfter=x+Cum_hour(2005-07-01 T00:00:00)), corresponding to the conditions in the fields 2231 to 2234. In the field 2235, "x" corresponds to "x" in the field 2234.

The inconsistency detecting processor 13 refers to the TBC converting table 223, and converts descriptions of the condition element of the TBC-type UR included in the checklist 29 based on items of the fields 2231 to 2234 (substantially, the fields 2233 and 2234), into a description format defined in the corresponding field 2235. For example, in the case of the checklist 29 as shown in Fig. 8B, a condition element of the TBC-type UR, "VALID_AFTER:100, VALID_BEFORE:820" stored in the Body2 of Type=TBC is converted into "NotBefore=100+Cum_hour(2005-07-01 T00:00:00), NotAfter=820+Cum_hour(2005-07-01 T00:00:00)".

Fig. 9D is another example of the condition-description converting table 22 for converting a condition element associated with the TBC in the REL-type UR into comparison data (REL (associated with TBC) converting table 224). As shown in Fig. 9D, the REL (associated with TBC) converting table 224 includes a field 2241 for storing TBC-associated condition elements that can be described in the BODY unit of the REL-type UR, and a field 2242 for storing comparison data for conversion, corresponding to the conditions in the field 2241, being related to each other.

The field 2241 defines variables x and y each indicating. the beginning (@notBefore) and the end (@notAfter) of the period of use, and a variable x indicating the period of use itself (@duration). As the comparison data in the field 2242, relational expressions that can calculate an elapsed time and an accumulated time from a predetermined time (2005-07-01 T00:00:00, i.e., at 00:00:00 on July 1st, 2005) are defined to calculate an actual period from the variable value in the field 2241. Values obtained by assigning specific variable values (x, y) in the relational expressions are the comparison data.

The inconsistency detecting processor 13 refers to the REL (associated with TBC) converting table 224, and converts the TBC-associated descriptions among the condition elements of the REL-type UR included in the checklist 29 based on the items in the field 2241, into a description format of the corresponding field 2242. For example, in the case of the checklist 29 as shown in Fig. 8B, a condition element of the REL-type UR stored in the Body1 of Type=TBC is converted into "NotBefore=Def_hour(2005-07-01 T00:00:00, 2005-07-01 T00:00:00), NotAfter=Def_hour(2005-12-31 T23:59:59, 2005-07-01 T00:00:00)". In this case, the start time is 00:00:00 on July 1st, 2005 and the end time is 23:59:59 on December 31st, 2005.

Fig. 9E is another example of the condition-description converting table 22 for converting a condition element of an OCB-type UR into comparison data (OCB converting table 225). As shown in Fig. 9E, the OCB converting table 225 includes a field 2251 for storing names (OCB) of variables that can be described in the BODY unit of the OCB-type UR, a field 2252 for storing values (such as 0000001, 0000010) of the variable that can be set for the variable name, and a field 2253 for storing comparison data for conversion (such as OCB="DRM_SYSTEM:A"), corresponding to the fields 2251 and 2252, the fields being related to each other.

The inconsistency detecting processor 13 refers to the OCB converting table 225, and converts descriptions of a condition element of the OCB-type UR included in the checklist 29 based on the variable name and value of the condition element, into a description format defined in the field 2253 corresponding to the variable name and value. For example, in the case of the checklist 29 as shown in Fig. 8B, a condition element [OCB:0000010] of the OCB-type UR stored in the Body2 of Type=OCB is converted into [OCB="DRM_SYSTEM:B"].

Fig. 9F is another example of the condition-description converting table 22 for converting an OCB-associated condition element in the REL-type UR into comparison data (REL (associated with OCB) converting table 226). As shown in Fig. 9F, the REL (associated with OCB) converting table 226 includes a field 2261 for storing names (such as identifier) of OCB-associated elements that can be described in the BODY unit of the REL-type UR, a field 2262 for storing values (such as A and B) of the OCB-associated elements that can be set for the element names, and a field 2263 for storing comparison data for conversion (such as OCB="DRM_SYSTEM:A"), corresponding to the conditions in the fields 2261 and 2262, these fields being related to each other.

The inconsistency detecting processor 13 refers to the REL (associated with OCB) converting table 226, and converts OCB-associated descriptions among the condition elements of the REL-type UR included in the checklist 29, based on the element name and value associated with the OCB of the condition element, into a description format defined in the field 2263 corresponding to the name and value of the OCB-associated element. For example, in the case of the checklist 29 as shown in Fig. 8B, an OCB-associated condition element in the REL-type UR stored in the Body1 of Type=OCB is converted into [OCB="DRM_SYSTEM:A"].

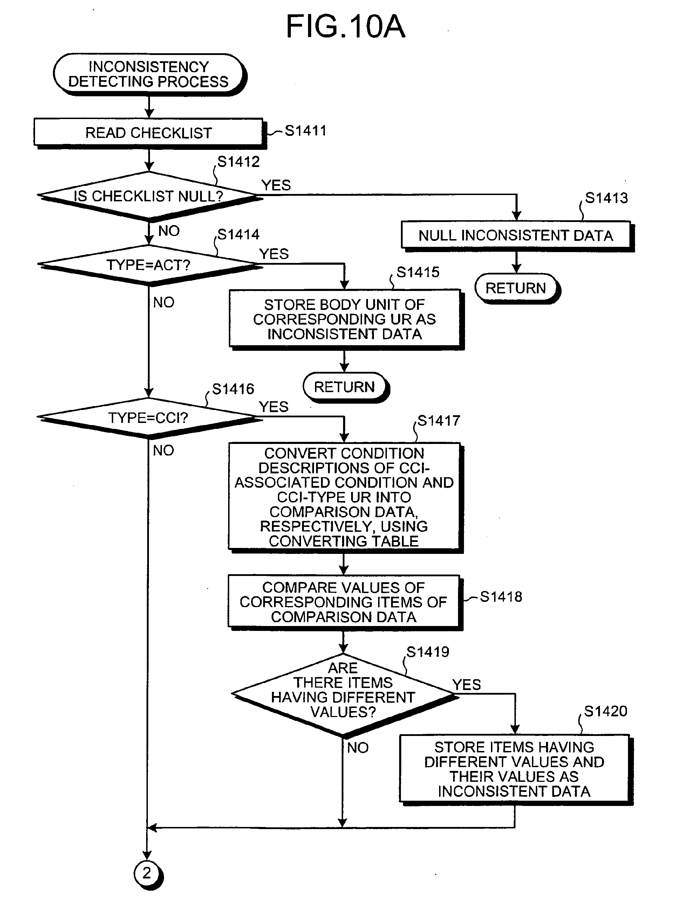

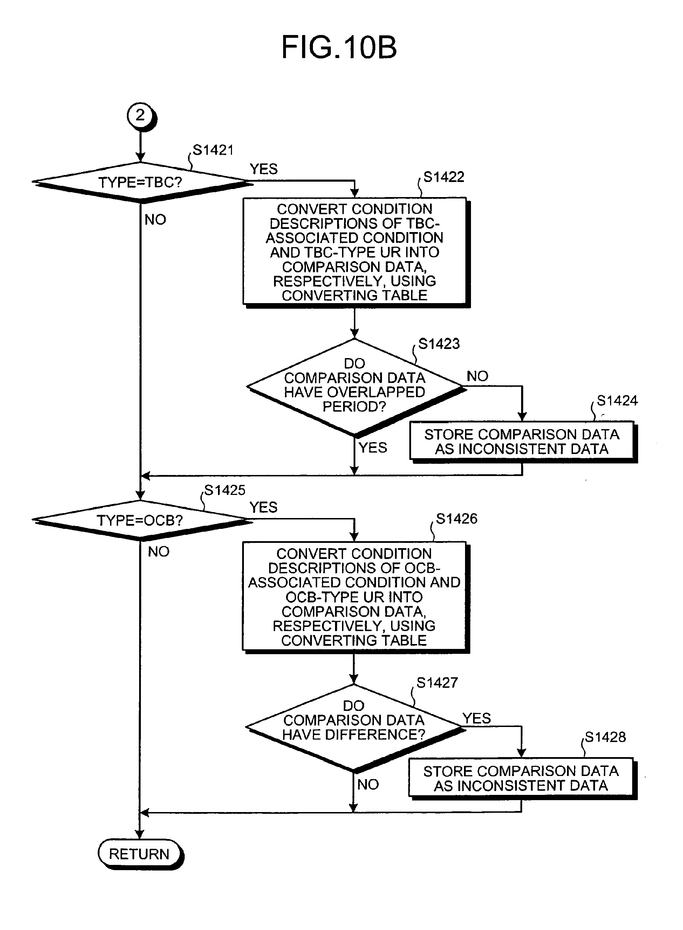

Fig. 10 is a flowchart of the inconsistency detecting process at step S14. The inconsistency detecting processor 13 reads the checklist 29 generated in the condition-independency check process at step S13 (step S1411), and determines whether data are stored in the checklist 29 (step S1412). When determining that no data is stored in the checklist 29 (YES at step S1412), the inconsistency detecting processor 13 nulls the inconsistent data 26 (step S1413), and proceeds to step S15 in Fig. 4.

When determining that data are stored in the checklist 29 (NO at step 1412), the inconsistency detecting processor 13 determines whether data of "TYPE=ACT" is stored in the checklist 29 (step S1414). When determining that the data of "TYPE=ACT" is stored (YES at step S1414), the inconsistency detecting processor 13 registers condition elements (BODY1, BODY2) related to the "TYPE=ACT" in the inconsistent data 26 (step S1415), and proceeds to step S15 in Fig. 4.

When determining that no data of "TYPE=ACT" is stored (NO at step S1414), the inconsistency detecting processor 13 determines whether data of "TYPE=CCI" is stored in the checklist 29 (step S1416).

When determining that the data of "TYPE=CCI" is stored (YES at step S1416), the inconsistency detecting processor 13 converts descriptions of condition elements (BODY1, BODY2) related to "TYPE=CCI" into comparison data based on the condition-description converting table 22 (step S1417), and compares items of the both comparison data (step S1418).

The inconsistency detecting processor 13 subsequently determines whether there are items having different values based on the result of the comparison at step S1418 (step S1419). When determining that there are items having different values (YES at step S1419, the inconsistency detecting processor 13 registers the items having different values and their values in the inconsistent data 26 (step S1420), and proceeds to step S1421.

When determining that there is no item having a different value (NO at step S1419), the inconsistency detecting processor 13 directly proceeds to step S1421.

When determining that no data of "TYPE=CCI" is stored (NO at step S1416), the inconsistency detecting processor 13 determines whether data of "TYPE=TBC" is stored in the checklist 29 (step S1421).

When determining that the data of "TYPE=TBC" is stored (YES at step S1421), the inconsistency detecting processor 13 converts descriptions of component elements (BODY1, BODY2) related to "TYPE=TBC" into comparison data based on the condition-description converting table 22 (step S1422). The inconsistency detecting processor 13 determines whether the both comparison data have an overlapped period (step S1423). When determining that the comparison data have no overlapped period (NO at step S1423), the inconsistency detecting processor 13 registers the comparison data in the inconsistent data 26 (step S1424), and proceeds to step S1425.

When determining that the comparison data have an overlapped period (YES at step S1423), the inconsistency detecting processor 13 directly proceeds to step S1425.

When determining that no data of "TYPE=TBC" is stored (NO at step S1421), the inconsistency detecting processor 13 determines whether data of "TYPE=OCB" is stored in the checklist 29 (step S1425). When determining that no data of "TYPE=OCB" is stored (NO at step S1425), the inconsistency detecting processor 13 directly proceeds to step S15 in Fig. 4.

When determining that the data of "TYPE=OCB" is stored (YES at step S1425), the inconsistency detecting processor 13 converts the descriptions of the component elements (BODY1, BODY2) related to "TYPE=OCB" into comparison data based on the condition-description converting table 22 (step S1426). The inconsistency detecting processor 13 determines whether the both comparison data have a difference (step S1427). When determining that the comparison data have a difference (YES at step S1427), the inconsistency detecting processor 13 registers the comparison data in the inconsistent data 26 (step S1428), and proceeds to step S15 in Fig. 4.

When determining that the comparison data have no difference (NO at step S1427), the inconsistency detecting processor 13 directly proceeds to step S15 in Fig. 4.

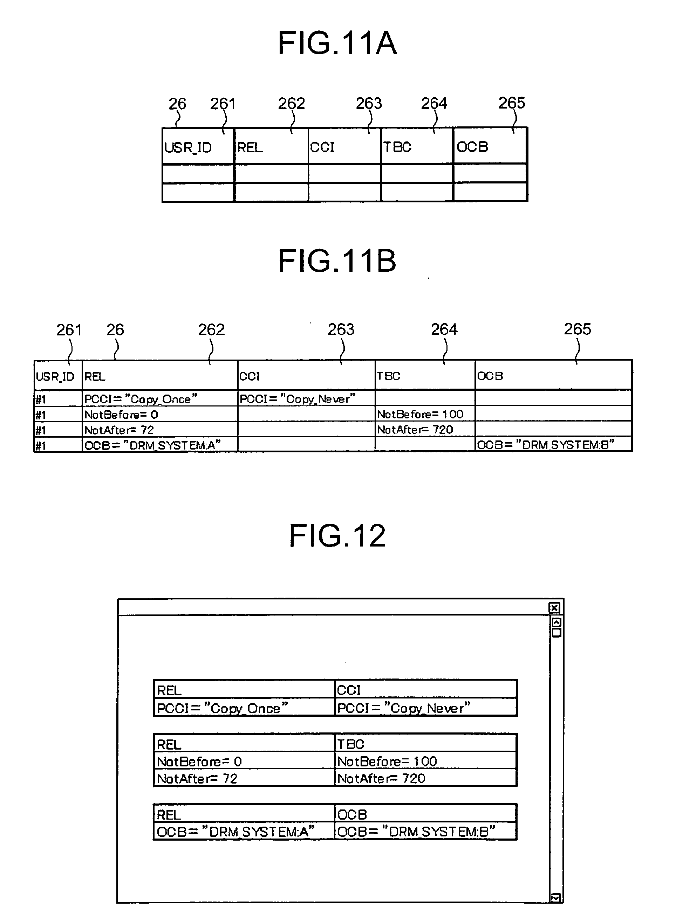

Fig. 11A depicts a data configuration of the inconsistent data 26 generated in the inconsistency detecting process. Fig. 11B depicts a specific example of the inconsistent data 26. As shown in Figs. 11A and 11B, the inconsistent data 26 includes a field 261 for storing ID information (U5R_ID) that identifies URSs to be processed, a field 262 for storing comparison data of the REL-type UR, a field 263 for storing comparison data of the CCI-type UR, a field 264 for storing comparison data of the TBC-type UR, and a field 265 for storing comparison data of the OCB-type UR.

Returning to Fig. 4, when determining that the inconsistent data 26 is not null from the result of the inconsistency detecting process at step S14 (YES at step S15), the inconsistency detecting processor 13 outputs the inconsistent data 26 to the TUF-data display/editing unit 12 (step S16). When receiving the inconsistent data 26, the TUF-data display/editing unit 12 displays the inconsistent data 26 on a screen, and shifts to a state that enables edition of condition information associated with the inconsistent data 26 (step S17). When edition of the condition information is instructed through the input I/F 16 or the like, the process returns to step S13, to check the edited URS again.

Fig. 12 is a schematic diagram for illustrating a screen image that is the inconsistent data 26 presented (displayed) by the TUF-data display/editing unit 12 on a display unit 55 (which is explained later) or the like. The inconsistent data 26 shown in Fig. 11B are presented here. In this example, only condition information including an inconsistency is displayed. However, it is also possible to display all condition information of the corresponding UR and highlight condition information including an inconsistency.

The user can edit the condition information through the input I/F 16 and the like based on the inconsistent data 26 displayed on the screen. Instruction information that instructs the edition is inputted to the TUF-data display/editing unit 12. The TUF-data storage unit 11 changes descriptions of the condition information to be edited, included in the TUF data 31, according to the details of the instruction information inputted through the TUF-data display/editing unit 12.

Returning to Fig. 4, when the inconsistency detecting processor 13 determines that the inconsistent data 26 is null (NO at step S15), the use-condition combining unit 14 performs a use-condition combining process (step S18). The use-condition combining process at step S18 is explained below.

The main processing performed in the use-condition combining process is to extract the "substantive inconsistency" that "a high-order (more valuable) model is forced to be used in worse conditions than a lower-order (less valuable) model", resulting from details of conditions changed due to presence or absence of a condition processing function of an expected content playing device (expected device). Before specific processing of the use-condition combining process is explained, the UR-type pattern 23 and the expected device-relation model 24 used in the use-condition combining process are explained below.

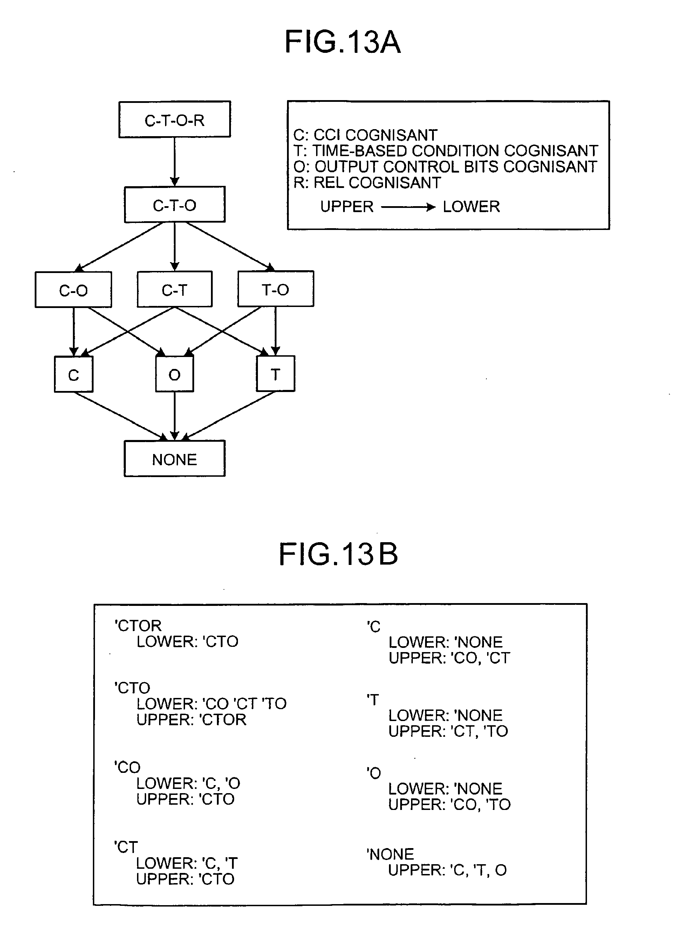

Fig. 13A depicts detailed data of the expected device-relation model 24 in a diagram of partial order relation between expected devices. In Fig. 13A, hierarchies of values (ranking relations) of devices are represented in view of the presence or absence of a function for processing URs (condition elements) of a content playing device, as premises to extract the substantive inconsistency.

In Fig. 13A, types of devices expected as the content playing device (expected device) are represented by nodes, and a ranking relation of the respective types is represented in a higher-lower order relation that is defined in view of the presence or absence of a processing function for each condition element. The nodes are coupled by a link, and it indicates that a node in an upper position is of a higher order. The symbols (C, T, O, and R) of the nodes indicate that the device has the following processing functions, respectively:
C: CCI determining function
T: Time-Based Condition determining function
O: Output Control Bits determining function
R: REL determining function

For example, a node "C-T-O-R" at the top level indicates a content playing device having all of the four processing functions. The REL-type UR can describe conditions of the other types, i.e., all of the CCI type, the TBC type, and the OCB type. Thus, when a device has the REL determining function, the device has the other three determining functions at the same time. Accordingly, combinations of functions as shown in Fig. 13A cover all patterns, and there is no other combination of functions (such as R-O).

Fig. 13B depicts specific data descriptions of the expected device-relation model 24. The higher-lower order relation of the expected devices is defined by "lower" and "upper". For example, it indicates that ['CTOR] corresponds to a node "C-T-O-R" shown in Fig. 13A, and that ['CTO] (corresponding to a node "C-T-O") is of a lower order (lower) than ['CTOR]. It also indicates that ['CO] (corresponding to a node "C-O"), ['CT] (corresponding to a node "C-T"), ['TO] (corresponding to a node "T-O") are of lower orders (lower) than ['CTO]. It indicates that ['CTOR] is of a higher order (upper) than ['CTO].

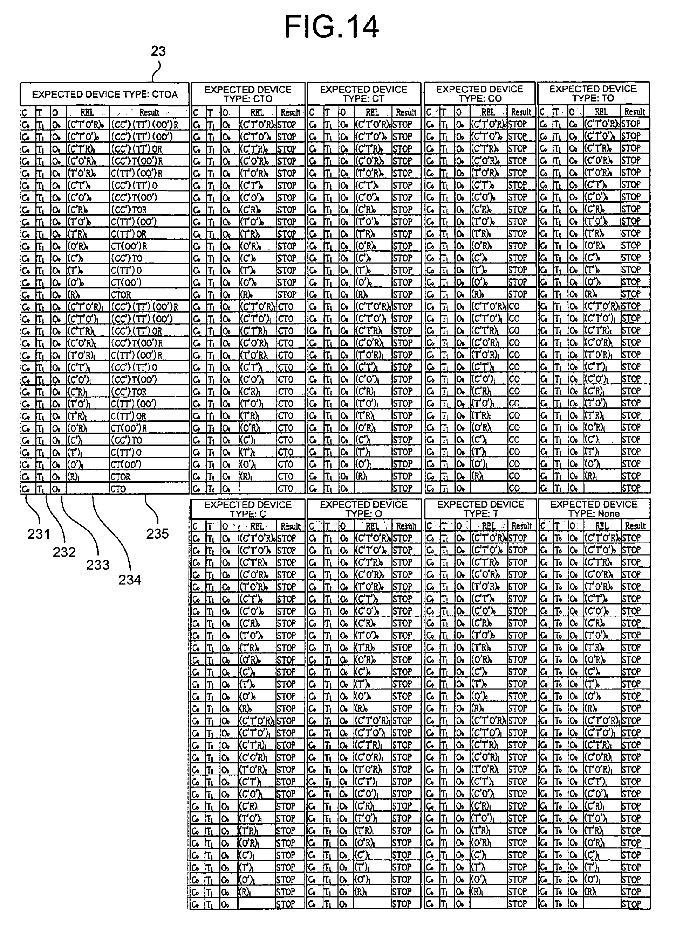

Fig. 14 is a part of the UR-type pattern 23. The UR-type pattern 23 is provided for each of the expected device types (CTOA, CTO, CT, CO, CT, TO, C, O, T, None) corresponding to the respective nodes in the expected device-relation model 24. Each of the UR-type patterns 23 includes a field 231 (c) for the CCI-type UR, a field 232 (T) for the TBC-type UR, a field 233 (O) for the OCB-type UR, a field 234 for the REL-type UR, and a field 235 for storing results of combination of the URs, i.e., use conditions (Result) that are practically determined (processed) by device types expected by the UR-type pattern 23.

The number of the UR-type patterns 23 is explained below. Each of the CCI-type UR, the TBC-type UR, and the OCB-type UR has the following three patterns. A first pattern (Type=1) forcefully performs playing when the URS includes the corresponding UR and this UR cannot be processed by a content playing device. A second pattern (Type=2) stops the play when the URS includes the corresponding UR and this UR cannot be processed by a content playing device. A third pattern (Type=3) is one of a case that the URS does not include the corresponding UR. That is, from the three patterns mentioned above and the three URs (CCI-type UR, TBC-type UR, and OCB-type UR), there are 3×3×3=27 combinations of patterns.

With regard to the REL-type UR, considering combinations of cases that the CCI-associated condition element, the TBC-associated condition element, and the OCB-associated condition element are included and that these condition elements are not included, respectively, and the presence or absence of other conditions that do not belong to any of the above condition elements, there are 2x2x2x2=16 combinations of patterns. Because each of the combinations has two patterns of Type=1 and Type=2, there are 16x2-1=31 combinations of patterns altogether.

There are 9 combinations of the CCI type, the TBC type, the OCB type, and the REL type in each type of the expected devices. Therefore, there are 27×31×9=7533 patterns altogether. The UR-type pattern 23 defines all of these patterns, respectively.

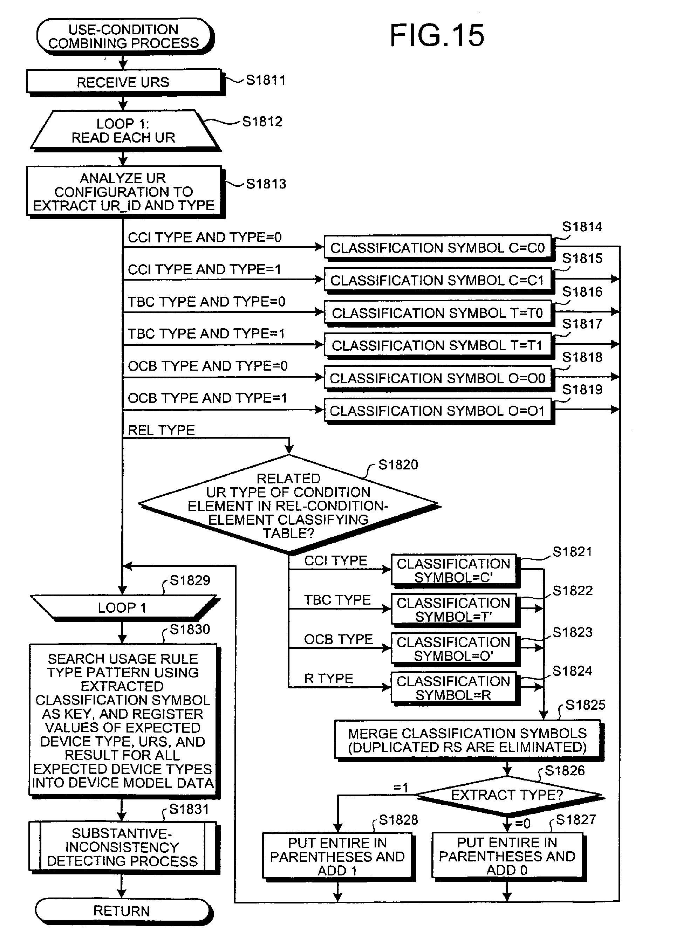

The use-condition combining process at step S18 is explained with reference to Fig. 15. Fig. 15 is a flowchart of the use-condition combining process at step S18.

The use-condition combining unit 14 receives a URS to be processed (step S1811), and performs processes at steps S1813 to S1828 to each of URs included in the URS (Loop 1; step S1812, step S1829).

In Loop 1, the use-condition combining unit 14 reads one of the URs included in the URS (step S1812), and analyzes the configuration of the UR to extract UR_ID and Type (step S1813). The use-condition combining unit 14 performs the following processes according to the UR_ID and Type extracted at step S1813.

When UR_ID=1 (CCI type) and Type=0, the use-condition combining unit 14 sets a classification symbol C at C0 (step S1814), and proceeds to step S1829. When UR_ID=1 (CCI type) and Type=1, the use-condition combining unit 14 sets the classification symbol C at C1 (step S1815), and proceeds to step S1829.

When UR_ID=2 (TBC type) and Type=0, the use-condition combining unit 14 sets the classification symbol T at T0 (step S1816), and proceeds to step S1829. When UR_ID=2 (TBC type) and Type=1, the use-condition combining unit 14 sets the classification symbol T at T1 (step S1817), and proceeds to step S1829.

When UR_ID=4 (OCB type) and Type=0, the use-condition combining unit 14 sets the classification symbol O at O0 (step S1818), and proceeds to step S1829. When UR_ID=4 (OCB type) and Type=1, the use-condition combining unit 14 sets the classification symbol O at O1 (step S1819), and proceeds to step S1829.

When UR_ID=3 (REL type), the use-condition combining unit 14 further extracts RelatedURTYPE of the condition element in the REL-condition-element classifying table 21 (S1820). The use-condition combining unit 14 performs the following processes according to the RelatedURTYPE extracted at step S1820.

When the RelatedURTYPE is CCI, the use-condition combining unit 14 assigns a classification symbol C' (step S1821), and proceeds to step S1825. When the RelatedURTYPE is TBC, the use-condition combining unit 14 assigns a classification symbol T' (step S1822), and proceeds to step S1825. When the RelatedURTYPE is OCB, the use-condition combining unit 14 assigns a classification symbol O' (step S1823), and proceeds to step S1825. When the RelatedURTYPE is R, the use-condition combining unit 14 assigns a classification symbol R (step S1824), and proceeds to step S1825.

At step S1825, the use-condition combining unit 14 merges the assigned classification symbols. Duplicated Rs are eliminated.

The use-condition combining unit 14 extracts Type of the REL-type UR (step S1826). When determining Type=0 (0 at step S1826), the use-condition combining unit 14 puts the entire of the merged classification symbols in parentheses, adds 0 thereto (step S1827), and proceeds to step S1829.

When determining Type=1 (1 at step S1826), the use-condition combining unit 14 puts the entire of the merged classification symbols in parentheses, adds 1 thereto (step S1828), and proceeds to step S1829.

When completed the Loop 1 (steps S1812 to S1829), the use-condition combining unit 14 searches the UR-type pattern 23 using the obtained classification symbols as retrieval keys, and registers values of the expected device types, the URSs (CCI-type UR, TBC-type UR, OCB-type UR, and REL-type UR), and the Results matching the retrieval keys in the device model data 27 (step S1830). The use-condition combining unit 14 performs the substantive-inconsistency detecting process (step S1831), and proceeds to step S19 in Fig. 4.

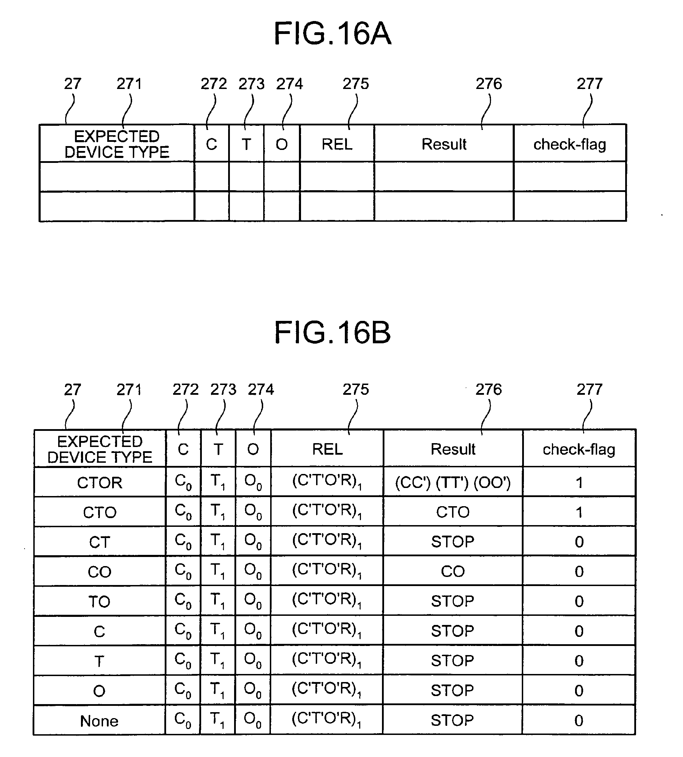

Fig. 16A depicts a data configuration of the device model data 27. Fig. 16B is depicts a specific example of the device model data 27.

As shown in Figs. 16A and 16B, the device model data 27 includes a field 271 for storing the expected device types, a field 272(C) for storing the classification symbol of the CCI-type UR, a field 273(T) for storing the classification symbol of the TBC-type UR, a field 274(O) for storing the classification symbol of the OCB-type UR, a field 275 (REL) for storing the classification symbol of the REL-type UR, a field 276(Result) for storing details of a result of combination of the URs (Result), and a field 277 for storing a Check-flag (hereinafter, CF) that is explained later.

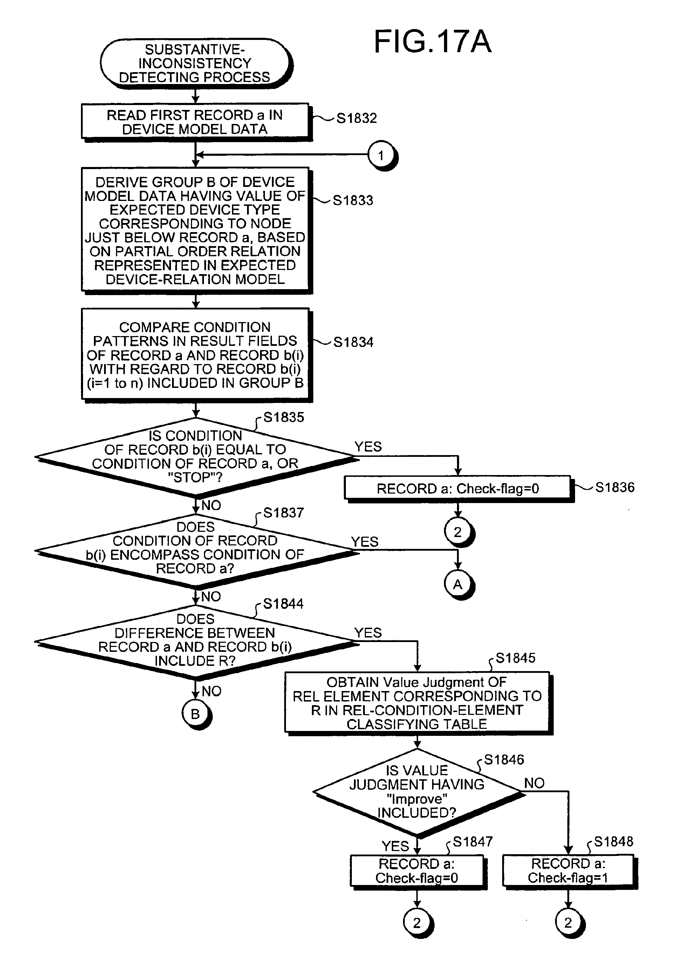

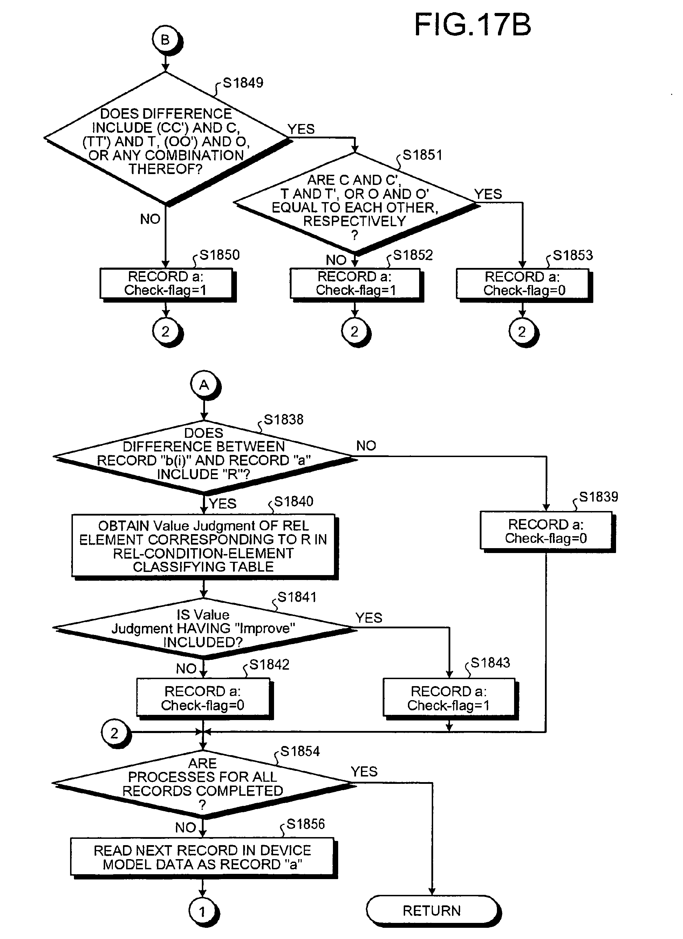

Figs. 17A and 17B are flowchart of the substantive-inconsistency detecting process at step S1831. The main processing performed here is to compare effective use conditions between a higher-order device and a lower-order device. This process assumes that a substantive inconsistency occurs in the following six cases. In any of the cases, a condition that a lower-order device is more advantageous than a higher-order device in use of digital contents is regarded as a substantive inconsistency.
- A case that a UR of the CCI-type, the TBC-type, or the OCB type, which cannot be processed by a lower-order device, is effective in a higher-order device.
- A case that a UR of the REL type that cannot be processed by a lower-order device and that has Value Judgment of "Depreciate" in the REL-condition-element classifying table 21 is effective in a higher-order device.
- A case that a UR of the REL type that cannot be processed by a higher-order device and that has Value Judgment of "Improve" in the REL-condition-element classifying table 21 is effective in a lower-order device.
- A case that "C" is effective in a lower-order device and "(CC')" is effective in a higher-order device, and the restriction of "(CC')" is more severe than "C".
- A case that "T" is effective in a lower-order device and "(TT')" is effective in a higher-order device, and the restriction of "(TT')" is more severe than "T".
- A case that "O" is effective in a lower-order device and "(OO')" is effective in a higher-order device, and the restriction of "(OO')" is more severe than "O".

Specific processes are explained below. The use-condition combining unit 14 reads a first record "a" that is stored in the device model data 27 (step S1832). The use-condition combining unit 14 derives a group B of records in the device model data 27 having a value of an expected device type corresponding to a node just below the record "a", based on the partial order relation of the devices represented in the expected device-relation model 24 (step S1833).

The use-condition combining unit 14 compares, with regard to a record "b(i)" included in the group B (i=1 to n where n is the total number of records included in the group B), a condition stored in the Result of the record "a" and a condition stored in the Result of the record "b(i)" (step S1834).

The use-condition combining unit 14 determines whether the condition of the record "b(i)" is equal to the condition of the record "a", or is "STOP" (S1835). When determining that the condition of the record "b(i)" corresponds to any of the above (YES at step S1835), the use-condition combining unit 14 stores "0" in the CF of the record "a" (step S1836), and proceeds to step S1854.

When determining that the condition of the record "b(i)" does not correspond to any of the above (NO at step S1835), the use-condition combining unit 14 determines whether the condition of the record "b(i)" encompasses the condition of the record "a" (step S1837).

When determining that the condition of the record "b(i)" encompasses the condition of the record "a" (YES at step S1837), the use-condition combining unit 14 determines whether a difference between the record "b(i)" and the record "a" includes "R" (step S1838). When determining that the difference does not includes "R" (NO at step S1838), the use-condition combining unit 14 stores "0" in the CF of the record "a" (step S1839), and proceeds to step S1854.

When determining that the difference between the record "b(i)" and the record "a" includes "R" (YES at step S1838), the use-condition combining unit 14 obtains values of the "Value Judgment" in the REL-condition-element classifying table 21, of the condition elements of the REL-type UR corresponding to the "R" (step S1840).

The use-condition combining unit 14 determines whether any of the obtained "Value Judgment" has "Improve" (S1841). When determining that no "Value Judgment" having "Improve" is included (NO at step S1841), the use-condition combining unit 14 stores "0" in the CF of the record "a" (step S1842), and proceeds to step S1854.

When determining that the obtained "Value Judgment" having "Improve" is included (YES at step S1841), the use-condition combining unit 14 stores "1" in the CF of the record "a" (step S1843), and proceeds to step S1854.

When determining that the condition of the record "b(i)" does not encompass the condition of the record "a" (NO at step S1837), the use-condition combining unit 14 determines whether a difference between the record "a" and the record "b(i)" includes "R" (step S1844).

When determining that the difference between the record "a" and the record "b(i)" includes "R" (YES at step S1844), the use-condition combining unit 14 obtains values of the "Value Judgment" of condition elements of the REL-type UR corresponding to the "R" in the REL-condition-element classifying table 21 (step S1845).

The use-condition combining unit 14 determines whether any of the obtained "Value Judgment" has "Improve" (step S1846). When determining that the obtained "Value Judgment" having "Improve" is included (YES at step S1846), the use-condition combining unit 14 stores "0" in the CF of the record "a" (step S1847), and proceeds to step S1854.

When determining that no obtained "Value Judgment" has "Improve" (NO at step S1846), the use-condition combining unit 14 stores "1" in the CF of the record "a" (step S1848), and proceeds to step S1854.

When the difference between the record "a" and the record "b(i)" does not include "R" (NO at step S1844), the use-condition combining unit 14 determines whether the difference between the record "a" and the record "b(i)" includes any of [(CC')] and [C], [(TT')] and [T], [(OO')] and [O], and any combination thereof (step S1849).

When determining that the difference between the record "a" and the record "b(i)" does not include any of [(CC')] and [C], [(TT')] and [T], [(OO')] and [O], and any combination thereof (NO at step S1849), the use-condition combining unit 14 stores "1" in the CF of the record "a" (step S1850), and proceeds to step S1854.

When determining that the difference between the record "a" and the record "b(i)" includes any of [(CC')] and [C], [(TT')] and [T], [(OO')] and [O], and any combination thereof (YES at step S1849), the use-condition combining unit 14 determines whether [C] and [C'], [T] and [T'], and [O] and [O'] are equal to each other, respectively (step S1851). The result of the logical inconsistency determination can be used in the determination at step S1851.

When determining that any or all of these are not equal to each other (NO at step S1851), the use-condition combining unit 14 stores "1" in the CF of the record "a" (step S1852), and proceeds to step S1854.

When determining that all of these are equal to each other (YES at step S1851), the use-condition combining unit 14 stores "0" in the CF of the record "a" (step S1853), and proceeds to step S1854.

The use-condition combining unit 14 determines whether these processes (steps S1833 to S1853) have been performed to all records included in the device model data 27 (step S1854). When determining that any record is not processed yet (NO at step S1854), the use-condition combining unit 14 reads a record next to the record "a" that has been now processed, as a record "a" (step S1855), and returns to step S1833.

When determining that these processes have been performed to all records (YES at step S1854), the use-condition combining unit 14 proceeds to step S19 in Fig. 4.

Returning to Fig. 4, the use-condition combining unit 14 determines whether any record in the device model data 27 has "1" in the CF from the result of the use-condition combining process at step S18 (step S19). When determining that any record has "1" in the CF (YES at step S19), the use-condition combining unit 14 outputs the device model data 27 to the TUF-data display/editing unit 12 (step S20).

When receiving the device model data 27, the TUF-data display/editing unit 12 displays the device model data 27 on the screen, and shift to a state that the URS can be edited (step S21). When edition of the URS is instructed through the input I/F 16 or the like, the process returns to step S13 to check the edited URS again.

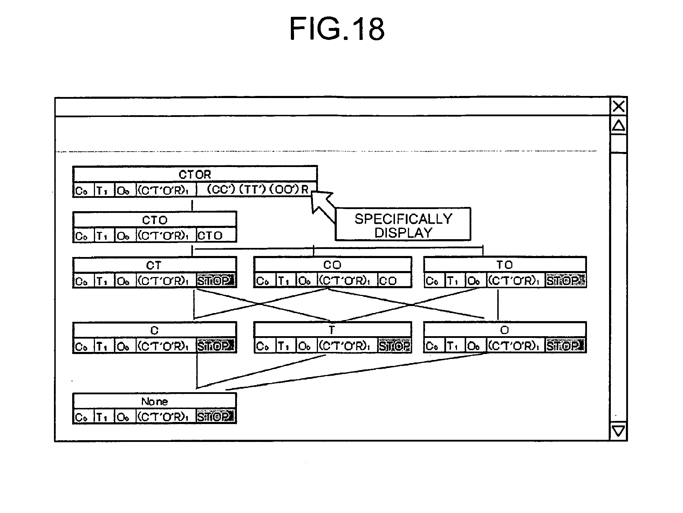

Fig. 18 is a schematic diagram for illustrating a screen image that is the device model data 27 presented (displayed) by the TUF-data display/editing unit 12 on the display unit 55 that is explained later. Data as shown in Fig. 16B are presented. In this example, the higher-lower order relation of the expected device types is visually represented, and parts in which substantive inconsistencies occur are highlighted. When this displayed part is selected and instructed to "specifically display", the corresponding part of the TUF data 31 is accessed to display specific descriptions.

The user can edit the setting of the condition information through the input I/F 16 or the like, based on the device model data 27 displayed on the screen. Instruction information instructing the edition is inputted to the TUF-data display/editing unit 12. The TUF-data storage unit 11 changes descriptions of the condition information to be edited, included in the TUF data 31, according to the details of the instruction information that is inputted through the TUF-data display/editing unit 12.

Returning to Fig. 4, when the use-condition combining unit 14 determines that no record has "1" in the CF (NO at step S19) and the processes at steps 13 to 21 have been performed to all URSs, the Loop 1 at step S22 is passed through, and the process proceeds to an inter-URS-situation generating process at step S23. The inter-URS-situation generating process at step S23 is explained below.

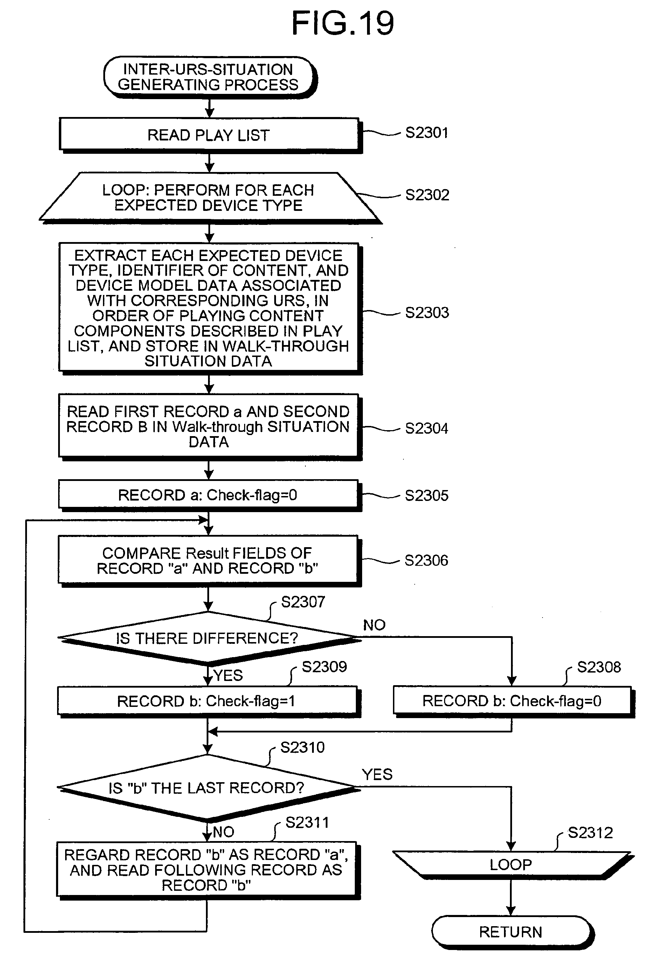

Fig. 19 is a flowchart of the inter-URS-situation generating process at step S23. The inter-URS-situation generating unit 15 reads the play list 32 (step S2301), and repeatedly performs processes at steps S2303 to S2311 for each of the expected device types (Loop: step S2302, step S2312).

In the loop, the inter-URS-situation generating unit 15 extracts the expected device type, an identifier of the content component, and the device model data associated with the corresponding URS, for all content components described in the play list 32 according to the order of playing the content components, and stores the extracted data as the Walk-through situation data 28 (step 52303).

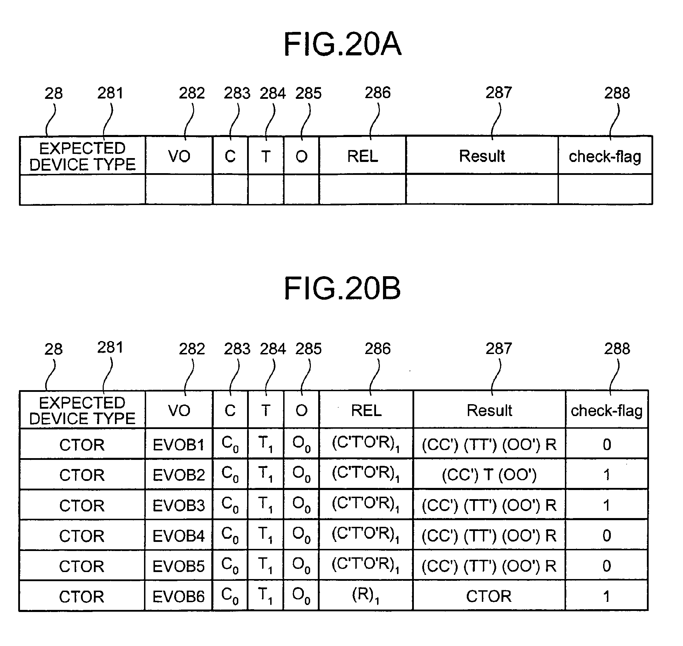

Fig. 20A depicts a data configuration of the Walk-through situation data 28. Fig. 20B depicts a specific example of the Walk-through situation data 28.

As shown in Figs. 20A and 20B, the Walk-through situation data 28 includes a field 281 for storing the expected device type, a field 282(VO) for storing an identifier of the content component, a field 283(C) for storing the classification symbol of the CCI-type UR, a field 284(T) for storing the classification symbol of the TBC-type UR, a field 285(O) for storing the classification symbol of the OCB-type UR, a field 286(REL) for storing the classification symbol of the REL-type UR, a field 287 for storing a result of combination of the URs, i.e., the use condition that is practically made effective (Result), and a field 288 for storing the Check-flag (CF).

Returning to Fig. 19, the inter-URS-situation generating unit 15 reads the first record "a" and the next record "b" stored in the Walk-through situation data 28 (step S2304), and stores "0" in the CF of the record "a" (step S2305).

The inter-URS-situation generating unit 15 compares the condition stored in the Result of the record "a" and the condition stored in the Result of the record "b" (step S2306), to determine whether there these conditions have a difference (step S2307).

When determining that these conditions have a difference (NO at step S2307), the inter-URS-situation generating unit 15 stores "0" in the CF of the record "b" (step S2308), and proceeds to step S2310. When determining that these conditions have no difference (YES at step S2307), the inter-URS-situation generating unit 15 stores "1" in the CF of the record "b" (step S2309), and proceeds to step S2310.

The inter-URS-situation generating unit 15 determines whether the record "b" is the last record stored in the Walk-through situation data 28 (step S2310). When determining that the record "b" is not the last record (NO at step S2310), the inter-URS-situation generating unit 15 regards the record "b" as the record "a", reads a record following the record "a" as the record "b" (step S2311), and returns to step S2306.

When determining that the record "b" is the last record stored in the Walk-through situation data 28 (YES at step S2310) and the process has been performed to all of the expected device types, the inter-URS-situation generating unit 15 goes through the loop at step S2312 and proceeds to step S24 in Fig. 4.

Returning to Fig. 4, the inter-URS-situation generating unit 15 determines whether the Walk-through situation data 28 includes a record having "1" in the CF from the result of the inter-URS-situation generating process at step S23 (step S24). When determining that the record having "1" in the CF is included (YES at step S24), the inter-URS-situation generating unit 15 outputs the Walk-through situation data 28 to the TUF-data display/editing unit 12 (step S25).

When receiving the Walk-through situation data 28, the TUF-data display/editing unit 12 displays the Walk-through situation data 28 on the screen, and shifts to a state that the URS can be edited (step S26). When edition of the URS is instructed through the input I/F 16 or the like, the process returns to step S11 to check the edited URS again.

When determining that no record has "1" in the CF (NO at step S24), the inter-URS-situation generating unit 15 terminates the process.

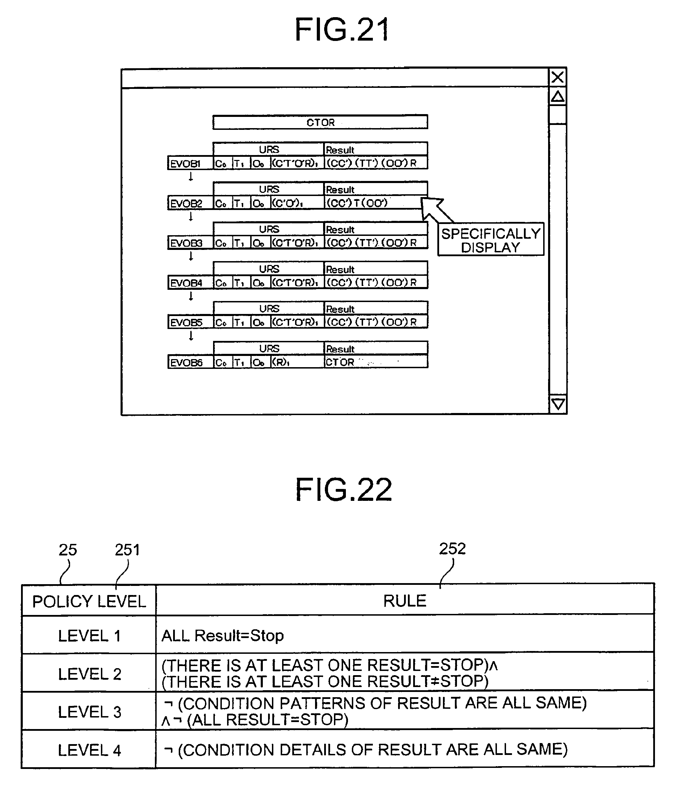

Fig. 21 is a schematic diagram for illustrating a screen image that is the Walk-through situation data 28 presented (displayed) by the TUF-data display/editing unit 12 on the display unit 55 that is explained later. The Walk-through situation data 28 shown in Fig. 20B are presented.

In this example, based on the play list, the URSs and the Results are displayed in a one-to-one correspondence in the order of playing content components (EVOB1 to EVOB6). The Result of the content component having a URS that is different from the previous and subsequent URSs is highlighted as a position where an inconsistency occurs. This highlighted part can be selected and instructed to "specifically display", so that the corresponding part in the TUF data can be accessed to display specific descriptions. In Fig. 21, a UR pattern associated with each content component is displayed abstractly as "URS". Alternatively, however, all of the corresponding URs can be displayed.

When rules as described later, which are defined in the provider policy 25, are applied in the presentation of the Walk-through situation data 28, it is possible to set to what extent the inconsistent portion is specifically displayed with regard to the Walk-through situation data 28. The provider policy 25 is explained below.

Fig. 22 is a schematic diagram for illustrating a data configuration of the provider policy 25. As shown in Fig. 22, the provider policy 25 includes a field 251 for storing policy levels (Levels 1 to 4) for identifying plural presentation (display) forms, and a field 252 that defines predetermined setting information (Rule) that decides the display form of the Walk-through situation data 28. The number of the policy levels is not limited to that shown in Fig. 22.

In the present embodiment, the following four kinds of setting information (Levels 1 to 4) are defined in view of strictness for the inconsistency.
Level 1: Not all Results are Stop.
Level 2: "Result=Stop" and "Result≠Stop" are not mixed.
Level 3: Details of "Result" are all the same (except "Result=Stop")
Level 4: Details of "Result" are all the same.

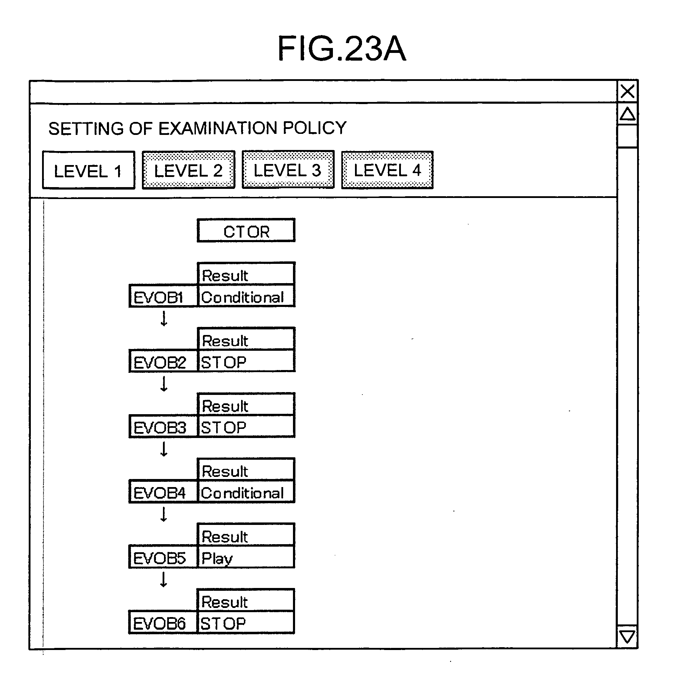

When a certain policy level is instructed by the user, the TUF-data display/editing unit 12 read a rule corresponding to the policy level from the field 252, and applies the rule to the Walk-through situation data 28. Accordingly, a URS that does not meet the rule corresponding to the policy level is detected, and the detected URS is highlighted as an inconsistent part. Examples of the Walk-through situation data 28 presented when the respective policy levels are set are explained with reference to Figs. 23A to 23D.

Fig. 23A depicts an example of the Walk-through situation data 28 presented when the rule of Level 1 is applied. The Results of content components EVOB1 to EVOB6 are displayed in the granularity of prohibition of play (STOP), permission with condition (Conditional), and play without condition (Play). In this example, contents that can be played with conditions (Conditional) and contents that can be played without condition (Play) are included. Therefore, it is determined that there is no inconsistency.

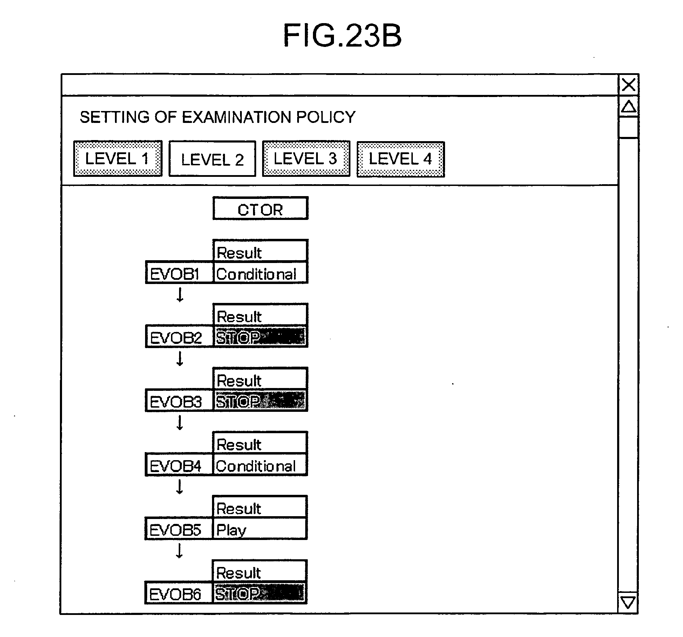

Fig. 23B depicts another example of the Walk-through situation data 28 presented when the rule of Level 2 is applied to the same example as that in Fig. 23A. In this case, contents having the Result of STOP, Conditional, and Play are mixed. The Results of STOP that certainly interfere with the playing of the whole contents are highlighted as the inconsistencies.

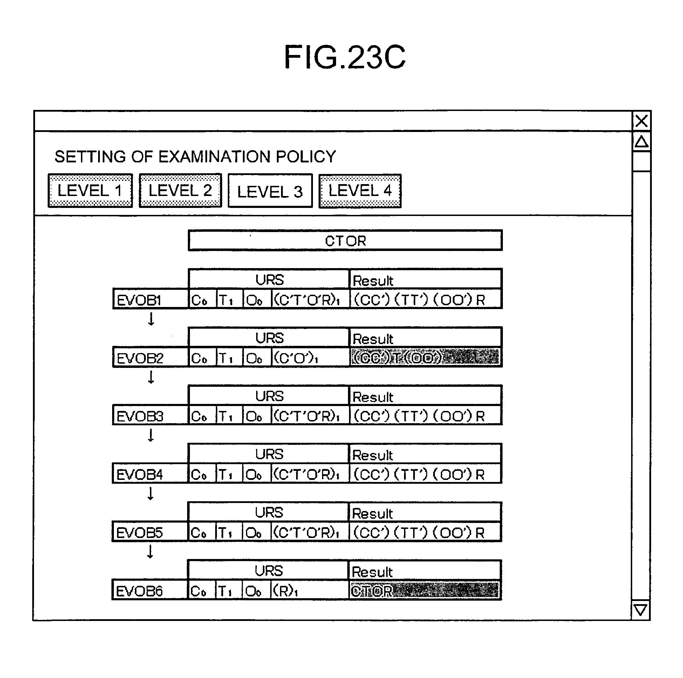

Fig. 23C depicts another example of the Walk-through situation data 28 presented when the rule of Level 3 is applied. In Fig. 23C, the granularity of the display is the same as that of the UR pattern to check an inconsistency at a more in-depth level than the Levels 1 and 2. Different patterns from the pattern of the Result of EVOB1 are highlighted.

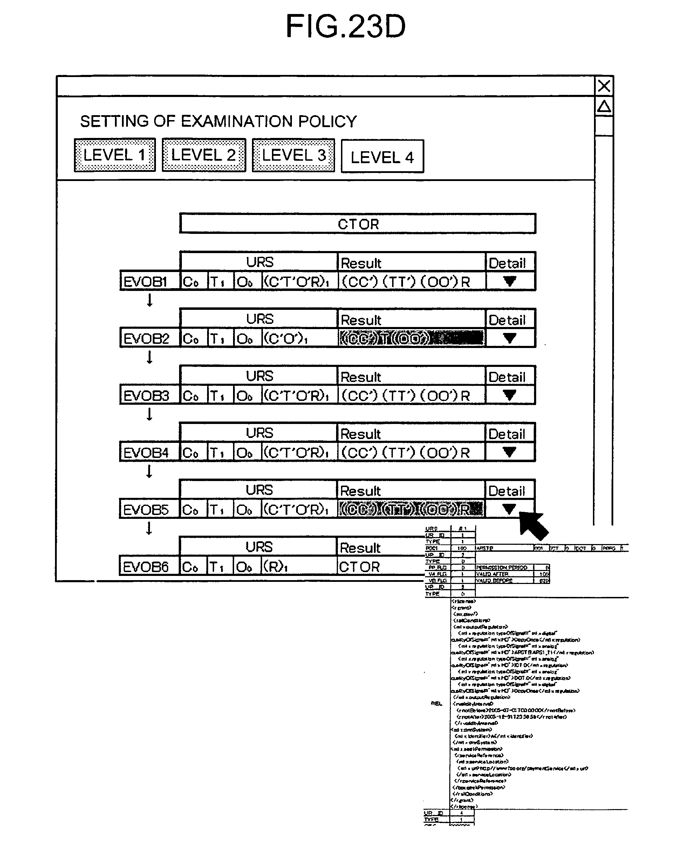

Fig. 23D depicts another example of the Walk-through situation data 28 presented when the rule of Level 4 is applied. With regard to the granularity of the display, details of the TUF can be also displayed by selecting a column of "Detail", as well as the UR pattern, to check an inconsistency at a more in-depth level than the Level 3. In the examination at this level, for example even when the UR pattern is different, the condition can be the same because the difference in the TUF information is closely examined.

As described above, the plural display forms can be selectively used. Therefore, the display result as required by the user who generates the usage right can be displayed. Accordingly, the user can easily check whether the operation meets his/her intention, which supports generation of use conditions with a high quality.

In the present embodiment, the rule defined in the provider policy 25 is applied only to the display of the Walk-through situation data 28. However, the present invention is not limited thereto. When rules according to the inconsistent data 26 or the device model data 27 are previously defined, the inconsistent data 26 and the device model data 27 can be displayed by applying these rules.

As described above, the digital content editing apparatus 100 according to the present embodiment detects a logical inconsistency associated with the usage rights of digital contents, and detects a substantive inconsistency between devices that play the digital contents, to present the logical inconsistency and the substantive inconsistency. Accordingly, the user who generates the usage rights can easily check that the operation meets his/her intention, which supports generation of the use conditions at a high quality.

The digital content editing apparatus 100 according to the present embodiment detects an inconsistency in the URS across the content components, and presents the inconsistency in the URS across the content components. Therefore, the user who generates the usage rights can easily check that the operation meets his/her intention, which supports generation of the use conditions at a high quality.

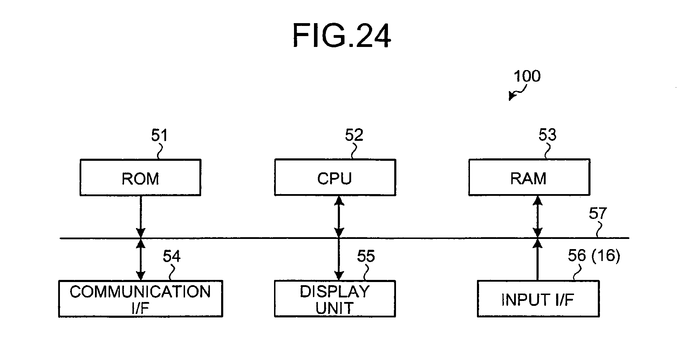

Fig. 24 depicts a hardware configuration of the digital content editing apparatus 100 according to the present embodiment. The digital content editing apparatus 100 includes, as the hardware configuration, a read only memory (ROM) 51 that contains various programs and the like, a CPU 52 that controls components of the digital content editing apparatus 10 according to a program in the ROM 51, a random access memory (RAM) 53 that temporarily stores various data required for the control of the digital content editing apparatus 100, a communication I/F 54 that is connected to a network to establish communications, a display unit 55 that displays a result processed by the digital content editing apparatus 100, an input I/F 56 (Input I/F 16) for the user to input a request for the process, and a bus 57 that connects these components. The digital content editing apparatus 100 can be applied to a typical computer having the configuration mentioned above.

The various programs executed by the digital content editing apparatus 100 according to the present embodiment are provided, being recorded as a file of an installable format or an executable format in a computer-readable recording medium, such as a compact disk read only memory (CD-ROM), a flexible disk (FD), and a CD recordable (CD-R), a DVD.

In this case, the programs are read from the recording medium and executed by the digital content editing apparatus 100 to be loaded into the main memory, thereby generating the components as described above as the software configuration on the main memory.

A content browsing program executed by the digital content editing apparatus 100 according to the present embodiment can be stored in a computer that is connected to a network such as the Internet, and be downloaded through the network. The content browsing program executed by the digital content editing apparatus 100 can be provided or distributed through the network such as the Internet.

The content browsing program according to the present embodiment can be previously installed in a ROM or the like.

The content browsing program executed by the digital content editing apparatus 100 according to the present embodiment has a module configuration including the components as described above. As practical hardware, the content browsing program is read from the recording medium and executed by the CPU (processor), to be loaded into the main memory, so that the components mentioned above can be generated on the main memory.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A digital content editing apparatus (100) comprising:
an acquiring unit (11) that acquires plural elements of condition information about a usage right of individual pieces of digital content;
a first detecting unit (13) that determines a consistency between elements of condition information that define a same kind of usage rights, among the plural elements of condition information, and detects inconsistent condition information in which a logical multiplication of the elements of the condition information is always false;
a first storage unit (23) that stores a pattern that is related to a combination of the condition information for each type of devices playing the digital contents that are classified based on presence or absence of a function for processing each element of the condition information;
a second storage unit (24) that stores a device relation model that defines a ranking relation between the device types according to a partial order relation of the processing function;
a second detecting unit (14) that determines a consistency in the rankings of the device types between elements of the condition information, based on the pattern and the device relation model, and detects an inconsistent device type in which an inconsistency is occurred in a device type; and
a first presenting unit (12) that presents the inconsistent condition information and the inconsistent device type detected by the first detecting unit (13) and the second detecting unit (14).

2. The apparatus (100) according to claim 1, wherein the plural elements of condition information have different description formats,
the apparatus (100) further comprises a third storage unit (22) that stores a translation table that converts description formats defining the same kind of conditions among the different description formats, into comparison formats that can be compared with each other, and
the first detecting unit (13) compares the comparison formats of the elements of condition information that define the same kind of conditions based on the translation table, and determines a consistency.

3. The apparatus (100) according to claim 2, wherein the first detecting unit (13) detects deference between the elements of condition information that defines the same type of usage right, as the inconsistent condition information.

4. The apparatus (100) according to claim 1, wherein the device relation model defines a "higher grade" - "lower grade" relation of the device types in view of the presence or absence of the function for processing the condition information, and
the second detecting unit (14) determines a consistency in the condition information between the higher grade and lower grade device types shown in the device relation model.

5. The apparatus (100) according to claim 4, wherein the second detecting unit (14) detects a type of a lower grade playing device having a more advantageous usage right than a higher grade playing device under a same condition, from a result of combination of the condition information between the device types, as the inconsistent device type.

6. The apparatus (100) according to claim 1, further comprising a third detecting unit (15) that determines a consistency in the usage rights between the plural pieces of digital contents, and detects a usage right including an inconsistency as an inconsistent condition.

7. The apparatus (100) according to claim 6, wherein the third detecting unit (15) compares combined results of the plural elements of condition information for individual pieces of digital content, and detects a usage right of the digital content having a difference in the combined result, as the inconsistent condition.

8. The apparatus (100) according to claim 1, further comprising a first editing unit (12) that edits the condition information associated with the inconsistent condition information and the inconsistent device type, based on the inconsistent condition information and the inconsistent device type presented by the first presenting unit (12).

9. The apparatus (100) according to claim 1, further comprising:
a fourth storage unit (25) that stores plural level of setting information associated with presentation forms of the inconsistent condition information and the inconsistent device type;
a first instructing unit (16) that instructs specific setting information among the plural level of setting information; and
a first presentation controller (12) that causes the presenting unit to presents the inconsistent condition information and the inconsistent device type in a presentation form according to the specific setting information.

10. The apparatus (100) according to claim 6, further comprising a second presenting unit (12) that presents the inconsistent condition detected by the third detecting unit (15).

11. The apparatus (100) according to claim 10, further comprising a second editing unit (16) that edits the condition information associated with the inconsistent condition, based on the inconsistent condition presented by the second presenting unit.

12. The apparatus (100) according to claim 10, further comprising:
a fifth storage unit (25) that stores plural pieces of setting information associated with presentation forms of the inconsistent condition;
a second instructing unit (16) that instructs a specific piece of setting information among the plural pieces of setting information; and
a second presentation controller (12) that causes the presenting unit to present the inconsistent condition information and the inconsistent device type in a presentation form according to the specific piece of setting information.

13. A digital content editing method comprising:
acquiring plural elements of condition information about a usage right of individual pieces of digital content;
determining a consistency between elements of condition information that define a same kind of usage rights, among the plural elements of condition information;
first detecting an inconsistent condition information in which a logical multiplication of the elements of the condition information is always false;
determining a consistency in the rankings of the device types between elements of the condition information, based on a pattern that is related to a combination of the condition information for each type of devices playing the digital contents that are classified based on presence or absence of a function for processing each element of the condition information, and a device relation model that defines a ranking relation between the device types according to a partial order relation of the processing function;
second detecting an inconsistent device type in which an inconsistency is occurred in a device type; and
presenting the inconsistent condition information and the inconsistent device type detected in the first and second detecting.

14. A computer program product having a computer readable medium including programmed instructions for editing digital content, wherein the instructions, when executed by a computer, cause the computer to perform:
acquiring plural elements of condition information about a usage right of individual pieces of digital content;
determining a consistency between elements of condition information that define a same kind of usage rights, among the plural elements of condition information;
first detecting an inconsistent condition information in which a logical multiplication of the elements of the condition information is always false;
determining a consistency in the rankings of the device types between elements of the condition information, based on a pattern that is related to a combination of the condition information for each type of devices playing the digital contents that are classified based on presence or absence of a function for processing each element of the condition information, and a device relation model that defines a ranking relation between the device types according to a partial order relation of the processing function;
second detecting an inconsistent device type in which an inconsistency is occurred in a device type; and
presenting the inconsistent condition information and the inconsistent device type detected in the first and second detecting.
